# EUROPEAN PATENT APPLICATION

(11) **EP 3 313 047 A1**
(43) Date of publication of application: **25.04.2018**
(21) Application number: 17205377.9
(22) Date of filing: 09.02.2015
(51) Int. Cl.: H04L 29/06, H04W 12/06

(54) **ASSISTED DEVICE PROVISIONING IN A NETWORK**

(30) Priority: 10.02.2014 US 201461937891 P; 14.05.2014 US 201461996812 P; 06.02.2015 US 201514616551
(62) Divisional of application: 15708365.0
(71) Applicant: QUALCOMM Incorporated, San Diego, CA 92121-1714 (US)
(72) Inventor: BENOIT, Olivier Jean, San Diego, CA, 92121-1714 (US); MALINEN, Jouni Kalevi, San Diego, CA, 92121-1714 (US); TINNAKORNSRISUPHAP, Peerapol, San Diego, CA, 92121-1714 (US)
(74) Representative: Wegner, Hans

(57) **Abstract**

Device provisioning (e.g., enrollment, configuration, and/or authentication) of a client device with a network device may be assisted using a configurator device. The configurator device may obtain a client public key associated with the client device and send the client public device to the network device. The network device may use the client public key in an authentication process between the network device and the client device. Following the authentication process, the client device may be configured for use with the network device to gain access to other network resources. In this manner, permission to gain access to the network device can be transparent to the user, often without the user having to enter codes or passwords.

## Description

### RELATED APPLICATIONS

This application claims the priority benefit of U.S. Provisional Application Serial No. 61/937,891 filed February 10, 2014 and U.S. Provisional Application Serial No. 61/996,812 filed May 14, 2014 and U.S. Application Serial No. 14/616,551 filed February 6, 2015.

### TECHNICAL FIELD

Embodiments of the present disclosure generally relate to the field of communication systems, and, more particularly, to device provisioning in a communication network.

### BACKGROUND

In many communication systems (e.g., satellite communication systems, wireless communication systems, powerline communication (PLC) systems, coaxial cable communication systems, telephone line systems, etc.), a network is comprised of devices that communicate with each other via a communication medium. Typically, a device must be granted access to the network before the device can communicate via the communication medium. The process of granting access may be referred to as device provisioning, and may include operations for association, enrollment, authentication, and/or other operations.

However, provisioning a new device for a network may be technically complicated or difficult for a user. For example, a new device may be required to enroll and/or authenticate to a network device (such as an access point) to gain access to network resources available through the network device. In traditional communication systems, the enrollment procedure may use security credentials provided by a user to control access and prevent unauthorized usage. Typical enrollment steps can include entering codes or other information by the user as the client device comes within communication range of the network device. However, these configuration steps can seem overly complicated to some users and may discourage the use of networks and their resources altogether.

Furthermore, some devices may be considered "headless" devices. Headless devices are devices which do not have a graphical user interface. Examples of headless devices might include sensors, light bulbs, cameras, actuators, appliances, game controllers, audio equipment or other communication devices that are capable of communicating via the communication network but which may not have a graphical user interface due to commercial or technical limitations. Initial network configuration of a headless device may be difficult due to the lack of a graphical user interface.

Simplifying device provisioning may enhance user experience and encourage adoption of more types of devices in a communication system.

### SUMMARY

This disclosure describes various embodiments of device provisioning to facilitate enrollment of a device being introduced to a network. Device provisioning may be enhanced using concepts from public key cryptography, in which the public keys are exchanged between devices using a device provisioning protocol. The device provisioning protocol may be directly between two devices, or may involve a third device referred to as a configurator device.

The configurator device may serve as an intermediary between a new client device and a network device. For example, an exchange of public keys between the client device and the network device may be facilitated by a configurator device having a trust relationship with the network device. The trust relationship may be established using an out-of-band communication. Enrollment of the new client device may be assisted by sharing one or more public keys through a trusted out-of-band channel with the configurator device.

In one embodiment, a method may comprise establishing, at a configurator device, a trust relationship with a network device of a network. The configurator device may determine a client public key associated with a client device, and send the client public key from the configurator device to the network device in accordance with the trust relationship. The client public key associated with the client device may be used for an enrollment process between the network device and the client device.

In another embodiment, the configurator device may comprise at least part of a trusted configurator service. For example, a trusted configurator service may provide a key exchange and key signing (e.g. certification) features to facilitate the provisioning between a client device and a network device.

In some embodiments, a method for provisioning a client device with a network device comprises establishing, at a configurator device, a trust relationship with the network device; determining, at the configurator device, a client public key associated with the client device; and sending, from the configurator device to the network device in accordance with the trust relationship, the client public key, wherein an authentication between the network device and the client device is based at least in part on the client public key.

In some embodiments, the method further comprises sending, from the configurator device or the network device to the client device, a network public key associated with the network device, wherein the authentication between the network device and the client device is further based at least in part on the network public key.

In some embodiments, establishing the trust relationship comprises determining a network public key associated with the network device; sending a configurator public key to the network device, the configurator public key corresponding to a configurator private key; and determining a trust relationship key associated with the trust relationship based at least in part on the network public key and the configurator private key.

In some embodiments, the method further comprises encrypting the client public key with the trust relationship key prior to sending the client public key from the configurator device to the network device.

In some embodiments, determining the network public key associated with the network device comprises receiving the network public key via a secure connection with the network device.

In some embodiments, determining the network public key associated with the network device comprises determining the network public key via an out-of-band connection with the network device that is different from a connection that the client device will establish with the network device.

In some embodiments, establishing the trust relationship comprises receiving a configurator support service advertisement from the network device prior to determining the network public key associated with the network device.

In some embodiments, determining the network public key associated with the network device comprises detecting the network public key using at least one member of the group consisting of a camera, a microphone, a light detector, a sensor, and a short-range radio frequency interface of the configurator device.

In some embodiments, detecting the network public key using the camera comprises using the camera to detect an image associated with the network device, wherein at least a portion of the image includes the network public key.

In some embodiments, determining the client public key associated with the client device comprises detecting the client public key using at least one member of the group consisting of a camera, a microphone, a light detector, a sensor, and a short-range radio frequency interface of the configurator device.

In some embodiments, detecting the client public key using the camera comprises using the camera to detect an image associated with the client device.

In some embodiments, sending the client public key associated with the client device comprises sending a request message to the network device; receiving a nonce from the network device; and sending an enrollment message to the network device, the enrollment message including the client public key and a configurator signature, wherein the configurator signature provides authentication to the network device that the configurator device is authorized to send the enrollment message.

In some embodiments, the configurator signature is either derived from the nonce and a configurator private key or is based, at least in part, on a trust relationship key associated with the trust relationship.

In some embodiments, the method further comprises receiving an enrollment key from the network device; and sending the enrollment key to the client device, wherein the enrollment key is used with the client public key for the authentication between the network device and the client device.

In some embodiments, the method further comprises sending configuration data from the configurator device to the network device after establishing the trust relationship.

In some embodiments, the method further comprises sending configuration data from the configurator device to the client device to aid the client device in associating with the network device.

In some embodiments, sending the configuration data comprises transmitting a first message on a default channel accessible by the client device.

In some embodiments, the first message includes identity information based, at least in part, on either the client public key or a network public key associated with the network device.

In some embodiments, the client device is a first client device, the network device is a second client device, and the configurator device is an access point.

In some embodiments, the network device is an access point of a network, and wherein the configurator device is associated with the access point.

In some embodiments, the method further comprises maintaining a list of network devices and a corresponding network public key for each of the list of network devices.

In some embodiments, a method for a network device to authenticate a client device comprises establishing, at the network device, a trust relationship with a configurator device; and receiving, from the configurator device in accordance with the trust relationship, a client public key associated with the client device; and using the client public key for authentication between the network device and the client device.

In some embodiments, establishing the trust relationship comprises providing a network public key associated with the network device to the configurator device or the client device, the network public key having a corresponding network private key.

In some embodiments, providing the network public key associated with the network device comprises providing the network public key using a display or short-range radio frequency interface of the network device.

In some embodiments, the method further comprises transmitting a first message on a default channel, wherein the first message includes information derived from either the client public key or a network public key associated with the network device.

In some embodiments, the method further comprises determining a shared key for use with the client device, the shared key based at least in part on the client public key and a network private key.

In some embodiments, the method further comprises receiving a configurator public key from the configurator device; and determining a trust relationship key associated with the trust relationship based at least in part on a network private key and the configurator public key.

In some embodiments, receiving the client public key includes receiving the client public key having been encrypted with the trust relationship key.

In some embodiments, establishing the trust relationship comprises transmitting a configurator support service advertisement from the network device.

In some embodiments, receiving the client public key associated with the client device comprises receiving a request message from the configurator device; sending a nonce to the configurator device; and receiving an enrollment message from the configurator device, the enrollment message including the client public key and a configurator signature derived, at least in part, from the nonce and a configurator private key.

In some embodiments, the method further comprises authenticating the enrollment message based, at least in part, on the configurator signature and a configurator public key.

In some embodiments, the method further comprises sending an enrollment key from the network device; and using the enrollment key with the client public key for the authentication between the network device and the client device.

In some embodiments, the method further comprises sending configuration data from the network device to the client device after using the client public key for authentication between the network device and the client device.

In some embodiments, the method further comprises maintaining, at the network device, a list of client devices and a corresponding client public key for each of the list of client devices.

In some embodiments, the method further comprises upon determining a change to the list of client devices, sending a notification of the change to another network device.

In some embodiments, the method further comprises maintaining, at the network device, a list of configurator devices and a corresponding trust relationship key for each of the list of configurator devices.

In some embodiments, a method for a client device to authenticate with a network device comprises receiving a first nonce and a network public key associated with the network device; generating a second nonce; determining a shared key based at least in part on a calculation that includes the first nonce, the second nonce, the network public key, and a client private key associated with the client device, wherein the client private key corresponds to a client public key associated with the client device; and sending an authentication response having a least a portion that is derived from the shared key, wherein the authentication response includes the second nonce.

In some embodiments, the shared key matches a corresponding shared key at the network device, the corresponding shared key based at least in part on a corresponding calculation, at the network device, that includes the first nonce, the second nonce, a network private key, and the client public key.

In some embodiments, the method further comprises sending the client public key to a configurator device having a trust relationship with the network device.

In some embodiments, the authentication response confirms to the network device that the client device has obtained the network public key.

In some embodiments, the network public key is received from a configurator device having a trust relationship with the network device.

In some embodiments, the method further comprises monitoring a default channel for a first message having configuration data; and receiving the first message on the default channel, wherein the configuration data includes information for the client device to associate with the network device.

In some embodiments, the first message includes identity information based, at least in part, on either the client public key or the network public key.

In some embodiments, a method for authenticating a client device with a network device comprises determining, at a configurator device, a first public key associated with one of the client device or the network device; generating, at the configurator device, a first certificate based on the first public key and a configurator private key; and sending the first certificate to the one of the client device or the network device to facilitate an authentication process between the client device and the network device.

In some embodiments, the method further comprises determining, at the configurator device, a second public key associated with the other one of the client device or the network device; generating, at the configurator device, a second certificate based on the second public key and the configurator private key; and sending the second certificate to the other one of the client device or the network device to facilitate the authentication process between the client device and the network device.

In some embodiments, the first certificate verifies identity of the one of the client device or the network device, and wherein the authentication process is based a shared key derived, at least in part, from the first certificate.

In some embodiments, a configurator device comprises a processor; and memory for storing instructions which, when executed by the processor, cause the processor to: establish, at the configurator device, a trust relationship with a network device; determine, at the configurator device, a client public key associated with a client device; and send, from the configurator device to the network device in accordance with the trust relationship, the client public key, wherein an authentication between the network device and the client device is based at least in part on the client public key.

In some embodiments, the instructions, when executed by the processor, cause the processor to send, from the configurator device or the network device to the client device, a network public key associated with the network device, wherein the authentication between the network device and the client device is further based at least in part on the network public key.

In some embodiments, the instructions, when executed by the processor, cause the processor to determine a network public key associated with the network device; send a configurator public key to the network device, the configurator public key corresponding to a configurator private key; and determine a trust relationship key associated with the trust relationship based at least in part on the network public key and the configurator private key.

In some embodiments, the configurator device further comprises an interface for establishing an out-of-band connection with the network device that is different from a connection that the client device will establish with the network device; and the instructions to determine the network public key comprise instructions that, when executed by the processor, cause the processor to determine the network public key via the out-of-band connection with the network device.

In some embodiments, the interface comprises a member of the group consisting of a camera, a microphone, a light detector, a sensor, and a short-range radio frequency interface.

In some embodiments, the instructions to determine the client public key comprise instructions that, when executed by the processor, cause the processor to detect the client public key using the interface.

In some embodiments, the instructions to send the client public key comprises instructions that, when executed by the processor, cause the processor to send a request message to the network device; receive a nonce from the network device; and send an enrollment message to the network device, the enrollment message including the client public key and a configurator signature, wherein the configurator signature provides authentication to the network device that the configurator device is authorized to send the enrollment message.

In some embodiments, the instructions, when executed by the processor, cause the processor to receive an enrollment key from the network device; and send the enrollment key to the client device, wherein the enrollment key is used with the client public key for the authentication between the network device and the client device.

In some embodiments, the instructions, when executed by the processor, cause the processor to send configuration data from the configurator device to the client device to aid the client device in associating with the network device.

In some embodiments, the instructions to send the configuration data comprises instructions that, when executed by the processor, cause the processor to transmit a first message on a default channel accessible by the client device.

In some embodiments, the first message includes identity information based, at least in part, on either the client public key or a network public key associated with the network device.

In some embodiments, the configurator device further comprises memory for maintaining a list of network devices and a corresponding network public key for each of the list of network devices.

In some embodiments, a network device comprises a processor; and memory for storing instructions which, when executed by the processor, cause the processor to establish, at the network device, a trust relationship with a configurator device; and receive, from the configurator device in accordance with the trust relationship, a client public key associated with a client device; and utilize the client public key for authentication between the network device and the client device.

In some embodiments, the instructions to establish the trust relationship comprises instructions that, when executed by the processor, cause the processor to provide a network public key associated with the network device to the configurator device or the client device, the network public key having a corresponding network private key.

In some embodiments, the network device further comprises a network interface; and wherein the instructions, when executed by the processor, cause the processor to transmit, via the network interface, a first message on a default channel, wherein the first message includes information derived from either the client public key or a network public key associated with the network device.

In some embodiments, the instructions, when executed by the processor, cause the processor to determine a shared key for use with the client device, the shared key based at least in part on the client public key and a network private key.

In some embodiments, the instructions, when executed by the processor, cause the processor to receive a request message from the configurator device; send a nonce to the configurator device; and receive an enrollment message from the configurator device, the enrollment message including the client public key and a configurator signature derived, at least in part, from the nonce and a configurator private key.

In some embodiments, the instructions, when executed by the processor, cause the processor to send an enrollment key from the network device; and use the enrollment key with the client public key for the authentication between the network device and the client device.

In some embodiments, the instructions, when executed by the processor, cause the processor to sending configuration data from the network device to the client device after using the client public key for authentication between the network device and the client device.

In some embodiments, the network device further comprises memory for maintaining, at the network device, a list of client devices and a corresponding client public key for each of the list of client devices.

In some embodiments, the instructions, when executed by the processor, cause the processor to upon determining a change to the list of client devices, send a notification of the change to another network device.

In some embodiments, the instructions, when executed by the processor, cause the processor to memory for maintaining, at the network device, a list of configurator devices and a corresponding trust relationship key for each of the list of configurator devices.

In some embodiments, a client device, comprises a processor; and memory for storing instructions which, when executed by the processor, cause the processor to receive a first nonce and a network public key associated with a network device; generate a second nonce; determine a shared key based at least in part on a calculation that includes the first nonce, the second nonce, the network public key, and a client private key associated with the client device, wherein the client private key corresponds to a client public key associated with the client device; and send an authentication response having a least a portion that is derived from the shared key, wherein the authentication response includes the second nonce.

In some embodiments, the instructions, when executed by the processor, cause the processor to prior to receiving the first nonce, send the client public key to a configurator device having a trust relationship with the network device.

In some embodiments, the instructions, when executed by the processor, cause the processor to monitor a default channel for a first message having configuration data; and receive the first message on the default channel, wherein the configuration data includes information for the client device to associate with the network device.

In some embodiments, the first message includes identity information based, at least in part, on either the client public key or the network public key.

In some embodiments, a computer readable medium having instructions stored therein, which when executed by a processor cause the processor to perform operations comprises establishing, at a configurator device, a trust relationship with a network device; determining, at the configurator device, a client public key associated with a client device; and sending, from the configurator device to the network device in accordance with the trust relationship, the client public key, wherein an authentication between the network device and the client device is based at least in part on the client public key.

In some embodiments, the instructions, when executed by a processor cause the processor to perform operations comprising sending, from the configurator device or the network device to the client device, a network public key associated with the network device, wherein the authentication between the network device and the client device is further based at least in part on the network public key.

In some embodiments, the instructions, when executed by a processor cause the processor to perform operations comprising determining a network public key associated with the network device; sending a configurator public key to the network device, the configurator public key corresponding to a configurator private key; and determining a trust relationship key associated with the trust relationship based at least in part on the network public key and the configurator private key.

In some embodiments, the instructions, when executed by a processor cause the processor to perform operations comprising detecting at least one of the network public key and the client public key using at least one member of the group consisting of a camera, a microphone, a light detector, a sensor, and a short-range radio frequency interface of the configurator device.

In some embodiments, the instructions, when executed by a processor cause the processor to perform operations that comprise sending a request message to the network device; receiving a nonce from the network device; and sending an enrollment message to the network device, the enrollment message including the client public key and a configurator signature, wherein the configurator signature provides authentication to the network device that the configurator device is authorized to send the enrollment message.

In some embodiments, the instructions, when executed by a processor cause the processor to perform operations that comprise receiving an enrollment key from the network device; and sending the enrollment key to the client device, wherein the enrollment key is used with the client public key for the authentication between the network device and the client device.

In some embodiments, the instructions, when executed by a processor cause the processor to perform operations that comprise transmitting a first message on a default channel accessible by the client device, the first message including configuration data to aid the client device in associating with the network device.

In some embodiments, the instructions, when executed by a processor cause the processor to perform operations that comprise maintaining a list of network devices and a corresponding network public key for each of the list of network devices.

In some embodiments, a computer readable medium having instructions stored therein, which when executed by a processor cause the processor to perform operations comprises establishing, at a network device, a trust relationship with a configurator device; and receiving, from the configurator device in accordance with the trust relationship, a client public key associated with a client device; and using the client public key for authentication between the network device and the client device.

In some embodiments, the instructions, when executed by a processor cause the processor to perform operations comprising providing a network public key associated with the network device to the configurator device or the client device, the network public key having a corresponding network private key.

In some embodiments, the instructions, when executed by a processor cause the processor to perform operations that comprise determining a shared key for use with the client device, the shared key based at least in part on the client public key and a network private key.

In some embodiments, the instructions, when executed by a processor cause the processor to perform operations that comprise receiving a request message from the configurator device; sending a nonce to the configurator device; and receiving an enrollment message from the configurator device, the enrollment message including the client public key and a configurator signature derived, at least in part, from the nonce and a configurator private key.

In some embodiments, the instructions, when executed by a processor cause the processor to perform operations that comprise sending an enrollment key from the network device; and using the enrollment key with the client public key for the authentication between the network device and the client device.

In some embodiments, the instructions, when executed by a processor cause the processor to perform operations that comprise sending configuration data from the network device to the client device after using the client public key for authentication between the network device and the client device.

In some embodiments, the instructions, when executed by a processor cause the processor to perform operations that comprise maintaining, at the network device, a list of client devices and a corresponding client public key for each of the list of client devices.

In some embodiments, the instructions, when executed by a processor cause the processor to perform operations that comprise upon determining a change to the list of client devices, sending a notification of the change to another network device.

In some embodiments, a computer readable medium having instructions stored therein, which when executed by a processor cause the processor to perform operations comprises receiving, at a client device, a first nonce and a network public key associated with a network device; generating a second nonce; determining a shared key based at least in part on a calculation that includes the first nonce, the second nonce, the network public key, and a client private key associated with the client device, wherein the client private key corresponds to a client public key associated with the client device; and sending an authentication response having a least a portion that is derived from the shared key, wherein the authentication response includes the second nonce.

In some embodiments, the shared key matches a corresponding shared key at the network device, the corresponding shared key based at least in part on a corresponding calculation, at the network device, that includes the first nonce, the second nonce, a network private key, and the client public key.

In some embodiments, the instructions, when executed by a processor cause the processor to perform operations that comprise sending the client public key to a configurator device having a trust relationship with the network device.

In some embodiments, the instructions, when executed by a processor cause the processor to perform operations that comprise monitoring a default channel for a first message having configuration data; and receiving the first message on the default channel, wherein the configuration data includes information for the client device to associate with the network device.

In some embodiments, the first message includes identity information based, at least in part, on either the client public key or the network public key.

### BRIEF DESCRIPTION OF THE DRAWINGS

The present disclosure may be better understood, and numerous objects, features, and advantages made apparent to those skilled in the art by referencing the accompanying drawings.
**Figure 1** is a conceptual diagram that introduces concepts of assisted device provisioning (e.g., enrollment, configuration, and/or authentication), in accordance with an embodiment of this disclosure;
**Figure 2** is an example block diagram illustrating various key sharing features, in accordance with an embodiment of this disclosure;
**Figure 3** is a flow diagram illustrating operations performed by a configurator device, in accordance with an embodiment of this disclosure;
**Figure 4** is a message flow diagram illustrating an example of assisted device provisioning using a configurator device to provide a client public key to a network device, in accordance with embodiments of this disclosure;
**Figure 5** is a message flow diagram illustrating an example of assisted device provisioning in which a client device monitors a default channel, in accordance with embodiments of this disclosure;
**Figure 6** is a message flow diagram illustrating an example of assisted device provisioning in which a configurator device provides an enrollment key to a client device, in accordance with embodiments of this disclosure;
**Figure 7** is a message process diagram illustrating a configurator device and network device establishing a trust relationship, in accordance with an embodiment of this disclosure;
**Figure 8** is a message process diagram illustrating a client device and network device establishing a connection, in accordance with an embodiment of this disclosure;
**Figure 9** is a message process diagram illustrating a cloud-based trusted configurator service for assisted device provisioning, in accordance with an embodiment of this disclosure;
**Figure 10** is another message process diagram illustrating a cloud-based trusted configurator service using certificates, in accordance with an embodiment of this disclosure;
**Figure 11** is a message process diagram illustrating an access point acting as a configurator service to facilitate a peer-to-peer wireless connection, in accordance with an embodiment of this disclosure;
**Figure 12** is a message process diagram illustrating adding a second configurator device, in accordance with an embodiment of this disclosure;
**Figure 13** is a conceptual diagram illustrating public key lists, in accordance with an embodiment of this disclosure; and
**Figure 14** is an example block diagram illustrating a device capable of implementing various embodiments of this disclosure.

### DESCRIPTION OF EMBODIMENT(S)

The description that follows includes exemplary systems, methods, techniques, instruction sequences and computer program products that embody techniques of the present disclosure. However, it is understood that the described embodiments may be practiced without these specific details. For instance, although examples described herein refer to wireless local area network (WLAN) enrollment, embodiments are not so limited. In other embodiments, the device provisioning may be implemented by client devices in other suitable shared-medium communication networks, such as powerline communications (PLC), coax networks, and/or phone line local area networks, etc. In some instances, well-known instruction instances, protocols, structures and techniques have not been shown in full detail in order not to obfuscate the description.

Embodiments of this disclosure may facilitate the device provisioning of a client device with a network device of a communication network. Device provisioning can enable the client device to gain access via the network device to other devices or network resources, such as data storage, printers, cloud-based resources, and/or internet access, etc. In this disclosure, the terms enrollment, enrolling, etc., are used to refer, interchangeably, to device provisioning.

In one embodiment, a configurator device may obtain a client public key associated with the client device and send the client public key to the network device. The network device may use the client public key in an enrollment process between the network device and the client device. Following a completion of the enrollment process, the client device may be configured for use with the network device, such as to gain access to other network resources. Further authentication may also be performed as a result of the successful enrollment process.

In one embodiment, the network device can use the client public key to enroll the client device without the client public key being shared (e.g., being transmitted) via a communication channel between the network device and the client device. For example, the network device can use the client public key to produce a shared key between the network device and client device. The shared key may be provided to the client device using an enrollment protocol in which public keys are exchanged and the shared key is determined locally by each of the client device and the network device without transmitting the shared key via the communication medium. The enrollment protocol being used can include operations based, at least in part, on Diffie-Hellman, Simultaneous Authentication of Equals (SAE), Wi-Fi Protected Setup (WPS) and/or any other technically feasible key establishment protocol using the client public/private keys and network public/private keys. In this manner, permission to gain access to the network device can be transparent to the user of the client device, for example, without the user having to take actions such as entering codes or passwords.

The client public key can be determined and provided to the network device via a trusted device, such as a configurator device. The configurator device may be collocated with the network device, or may be separate. The configurator device may be a user device, such as a smart phone, that establishes a trust relationship with the network device, such as an access point. In some embodiments, the configurator device may have proximity, or trust, in relation to the client device. For example, the configurator device may obtain the client public key using an out-of-band communication directly with the client. The use of out-of-band communication can help by avoiding potential impersonation or man-in-the-middle attacks. The configurator device may be configured to obtain the client public key from the client device so that no other public key could be improperly used as the public key for the client device.

A network may maintain a list of devices, and associated public keys, to coordinate enrollment of a device at several network devices. For example, a client device added at a first network device may be enrolled at second network device in response to the first network device sharing the public key of the client device to the second network device. Additionally, when a client device is removed from a network, removal of the device public key from the list of devices may cascade the removal of the client device among other network devices. One or more network devices of a network may maintain a list of client device and a list of configurator devices that are associated with the network. The public keys of the client device(s) and configurator device(s) may be shared between trusted devices in the network.

In some embodiments, a configurator device may certify the client public key to create a client certificate, and may also certify a network public key to create a network certificate. The client certificate and the network certificate could be certified using a configurator private key. The certificates could be used to facilitate enrollment between the client device and the network device, since the authenticity of the client public key and network public key can be verified by each of these two devices.

In the foregoing description, the configurator device may be used in a number of different embodiments. For example, the configurator device may be used to transfer a single public key (e.g., the client public key from the client device) to the network device. In another example, the configurator device may be used to transfer two public keys (e.g., the client public key and the network public key) to the network device and client device, respectively. In another example, the configurator device may also provide a certification feature to each of the client device and network device. In the various examples, the configurator device may utilize a trust relationship with the network device and out-of-band communication with the client device to provide confidence that the public keys are shared between the correct client device and correct network device.

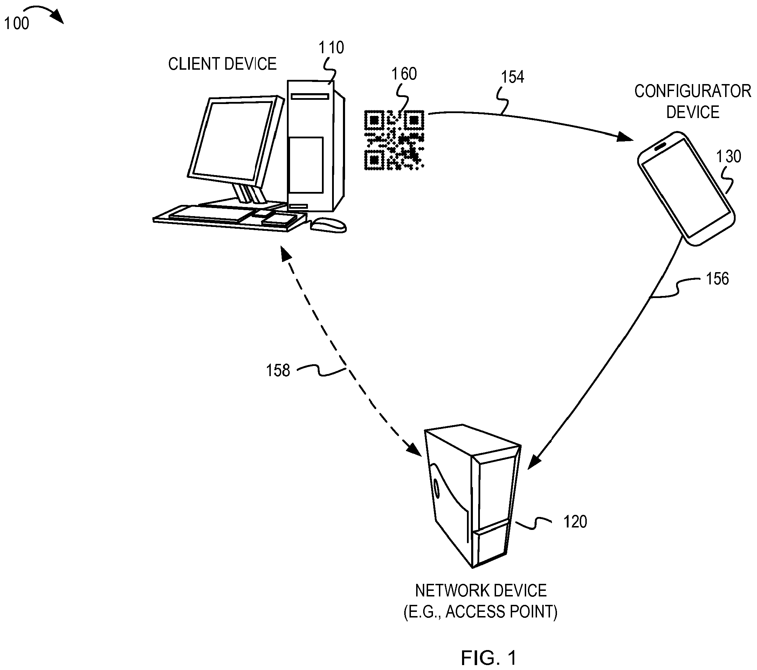

**Figure 1** depicts an example system 100 in which the present disclosure may be used. In the example system 100, a client device 110 may be within range of communication to a network device 120. The client device 110 may be a laptop, smartphone, appliance, or any other device which has not yet been authorized by the network device 120. The network device 120 may also be referred to as an enroller device. As an example, the network device 120 may be a WLAN access point. The client device 110 may be considered communicatively coupled with the network device 120 after it has been provisioned with the network device 120. In some embodiments, the client device 110 may be referred to as an enrollee device until it has been properly provisioned by the network device 120.

In a hypothetical scenario, a friend or family member (i.e., that is a user of a client device) visiting a house may wish to gain access to a WLAN via the access point. Alternatively, access to a WLAN may be provided for guests at a hotel, convention center, or public space, but is restricted based on authentication. In traditional WLAN deployments, a user of the client device 110 may be required to enter a passcode or other information to permit the client device 110 to properly authenticate with the network device 120. According to this disclosure, client device 110 may be provisioned, in some embodiments, without requiring a user to manually enter a passcode or network key. Furthermore, the security of the WLAN may be maintained so that only authorized users are allowed to gain access to the WLAN.

As shown in Figure 1, a configurator device 130 may assist with provisioning of the client device 110. The configurator device 130 may be a computing device (such as laptop, personal computer, tablet, smartphone, networked appliance, or the like). In the hypothetical example, configurator device 130 is a mobile device having a camera, processor, and network interface. The configurator device 130 is communicatively coupled to network device 120. To get the client device 110 enrolled to the network device 120, the configurator device 130 may obtain a client public key associated with the client device 110 and provide it to the network device 120.

In this disclosure, when referring to public keys and private keys, each public key and private key may be related in a pair. The private and public keys in a pair may form two keys which are mathematically linked but are different from each other. The public key may be used to encrypt information or to verify a digital signature. The private key may be used to decrypt the information or to create a digital signature. A person of skill in the art may recognize this concept by other names, such as public-key cryptography or asymmetric cryptography. It should be understood that other security mechanisms may be used in addition to, or alternatively from, the public key encryption. For example, dynamic keys, key rotation, hashing algorithms, or other mechanisms may be used in addition to, or alternatively from, the public key and private key mechanisms describe herein. For simplicity, public key cryptography is described in this disclosure as an example embodiment.

As shown in Figure, 1, the client public key 154 may be obtained by taking a picture of a Quick Response (QR) coded image 160 having the client public key 154 encoded therein. The configurator device 130 decodes the client public key 154 and provides the client public key 154 to the network device 120 in an enrollment message 156. The network device 120 may use the client public key 154 in an enrollment process and/or further authentication (shown at 158), such that the client device 110 is communicatively added to the network without passing sensitive data over the network.

The configurator device 130 may extend the enrollment capabilities of the network device 120 to a mobile device. For example, the network device 120 may not be equipped with camera, scanner, short range radio interface, or near field communications (NFC) tag reader capabilities. Furthermore, the network device 120 may be mounted in a fixed position or in a hard to reach location. Nevertheless, the configurator device 130 may be a mobile device and better suited to obtain the client public key of a client device 110 being added to the network. The configurator device 130 can provide the client public key to the network device 120 for use in enrolling the client device 110.

Referencing the example of the household scenario given above, a family member or friend may simply launch an application that presents (e.g., displays an encoded image) the client public key of their client device. The owner of the household can add the client device to the network by detecting the client public key using a mobile device that is acting as a configurator device 130. Similarly, guests to a hotel or convention may be granted access to wireless network services using assisted enrollment without the need for passcodes or complicated manual configuration.

It should be understood that a device may operate as the configurator device 130 in one environment, while operating as the client device 110 in another environment. As an example, a mobile device belonging to Person A may be used in Person A's home as a configurator device 130 for a network device 120 in Person A's home. The same mobile device belonging to Person A may be used as a client device 110 when the mobile device is in Person B's home and for a different network device (not shown) in Person B's home. Finally, the mobile device may also operate as the network device 120, such as when a mobile device is used as a hotspot or a Peer-to-Peer (P2P) Group owner. In some embodiments, the network device 120 and configurator device 130 features may be collocated or embodied in the same physical apparatus. For example, the mobile device may provide a mobile hotspot to other devices. At the same time, the mobile device may operate as a configurator device 130 for assisting the enrollment of new client devices.

The foregoing hypothetical scenarios are provided for illustrative purposes. It is noted that many alternative uses of this disclosure may be contemplated. In the foregoing descriptions, several embodiments are described which may utilize a configurator device to assist with provisioning of a new client device.

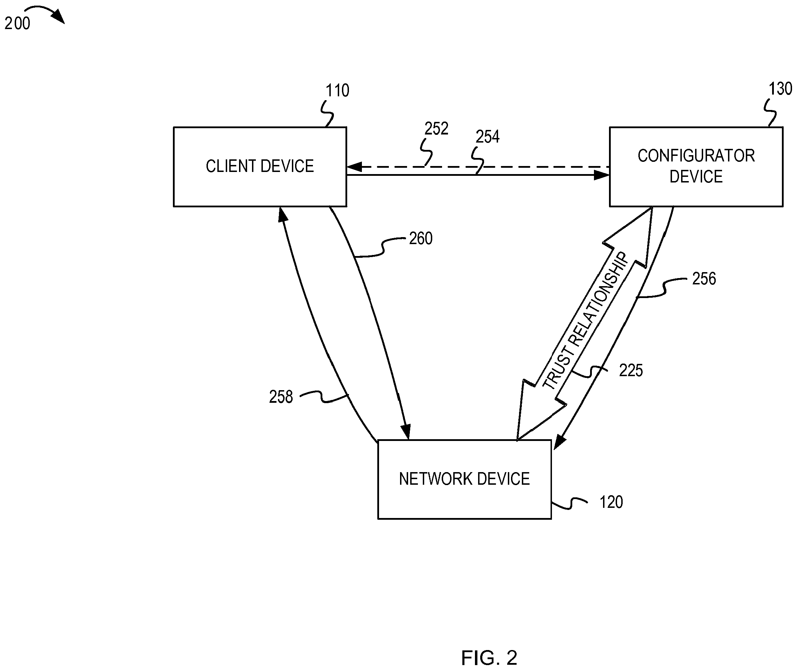

**Figure 2** depicts an example system 200 with additional detail. Similar to Figure 1, a client device 110 may be within range of communication to a network device 120. In this example, a configurator device 130 may assist network device 120 with provisioning the client device 110.

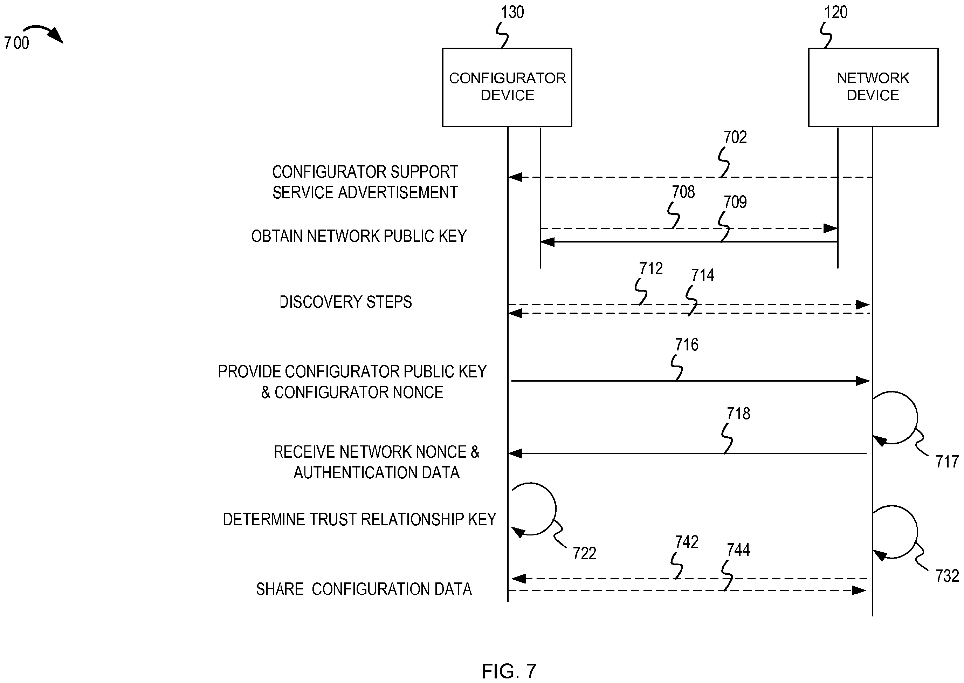

The configurator device 130 may establish a trust relationship 225 between the configurator device 130 and network device 120. Examples of the trust relationship 225 are further described with reference to Figure 7. The trust relationship 225 may include the use of security keys to authenticate and/or encrypt communications between the configurator device 130 and network device 120. Furthermore, the trust relationship 225 represents a relationship in which the configurator device 130 is authorized to assist with provisioning of new devices, such as client device 110.

Establishing the trust relationship may include steps for the configurator device 130 to set up a trust relationship key for the trust relationship 225. For example, the configurator device 130 may determine a network public key associated with the network device 120. The configurator device 130 may have a configurator public key and a corresponding configurator private key. The configurator device 130 may determine the trust relationship key based at least in part on the network public key and the configurator private key. Similarly, the network device 120 may determine the trust relationship key based at least in part on the network private key and the configurator public key.

In Figure 2, the configurator device 130 obtains a client public key (shown as line 254) associated with the client device 110. The client device 110 may have a client public key 254 and a corresponding client private key. The configurator device 130 may obtain the client public key 254, for example, by using an out-of-band communication channel or detection. For example, the configurator device 130 may utilize a camera to scan an image associated with the client device 110. The image may be a 2D or a 3D image. For example, the image may be a Quick Response (QR) code or a barcode. The image may be affixed to the client device 110 or packaging associated with the client device 110. Other types of visual, audio, or electrical out-of-band communication channel may be used by the configurator device 130 to obtain the client public key 254. For simplicity, the examples herein are described in terms of an image having the client public key encoded therein.

In some embodiments, the image may be static or ephemeral. For example, the client device 110 may be equipped with a display and may create a different image for different instances of enrollment or for different networks. The client public key 254 can be determined by scanning and decoding the machine readable image (e.g., the QR code) with a camera, smart phone, scanner, or other machine readable code reader of the configurator device 130. Using a machine readable image, such as a QR code, can help to determine the client public key relatively quickly, and can reduce human error associated with obtaining or reading the client public key. In yet another embodiment, a near field communication (NFC) tag (not shown) containing the client public key 254 can be provided by the manufacturer, and be attached to, or located proximate to, the client device 110. The NFC tag can be read by a NFC tag reader to determine the client public key 254. Using the NFC tag can also reduce errors in determining client public key 254 of client device 110.

Once the configurator device 130 has obtained the client public key 254, the configurator device 130 may send the client public key 254 in an enrollment message 256 to the network device 120. In one embodiment, prior to sending the enrollment message 256, the configurator device 130 may initiate enrollment by sending a request message to the network device 120. The request message (not shown) may cause the network device 120 to provide a nonce for the enrollment. The nonce may be a random or pseudorandom number that can be provided by the network device 120. The configurator device 130 may use the nonce to prepare a signature to accompany the client public key 254. The signature may also be based on an encryption and/or a signing process that proves the configurator device 130 is authorized to send the enrollment message 256. The enrollment message 256 may include the client public key 254 and the signature, as well as other information. For example, the enrollment message 256 may include information regarding how the client public key 254 was obtained, a timestamp, an identifier of the network device 120, an enrollment request identifier, and/or other information. In one embodiment, the signature, the nonce, or both, may be encrypted using the trust relationship key.

When the network device 120 receives the enrollment message 256, the network device 120 may verify the signature as coming from a properly authorized configurator device 130 having a trust relationship 225 with the network device 120. If the signature is verified, the network device 120 may use the client public key 254 from the enrollment message 256 to complete the enrollment directly with the client device 110. For example, in one embodiment, the network device 120 may initiate the enrollment by transmitting a probe response message (not shown) in response to a probe request message. The probe response message may include a hash or other derivative of the client public key. In another embodiment, the network device 120 may initiate enrollment and perform an initial wireless association to establish a communication session with the client device 110, over which further authentication and configuration can be exchanged.

The enrollment and authentication of the client device 110 may include an authentication procedure between the network device 120 and the client device 110. For example, the network device 120 may send an authentication request message 258 to the client device 110. The authentication request message 258 may include the network public key as well as a nonce provided by the network device ("network-provided nonce"). The client device 110 may generate a second nonce (or a "client-provided nonce"), and then generate a shared key using the network-provided nonce, the client-provided nonce, the network public key, and the client private key. Next, the client device 110 may send an authentication response message 260 back to the network device 120. The authentication response message 260 may include the client-provided nonce and a message authentication code (MAC) of the client-provided nonce. The MAC of the client-provided nonce may be a cryptographic hash function of the client-provided nonce (e.g., that has been prepared using the shared key).

The network device 120 can similarly prepare a shared key. The shared key may be generated from the network-provided nonce, the client-provided nonce, the client public key, and the network private key. The network device 120 can verify that it has the same shared key as that generated by client device 110 if the network device 120 generates a same MAC from the client-provided nonce and shared key as the MAC included in the authentication response message 260.

Once the existence of the shared key has been verified, the network device 120 may consider the client device 110 as enrolled. The network device 120 may use the shared key for further communications (not shown on Figure 2) between the network device 120 and client device 110, such as configuration, network association, or additional authentication. For example, the network device 120 may send configuration data to the client device 110. The configuration data may include settings for the wireless access, such as an SSID of the wireless access point, channel, or power settings. The configuration data may also include additional information for security, application layer, or other settings used by the client device 110 to communicate via the network device 120.

Following enrollment, in one embodiment, the client device 110 and network device 120 may perform further authentication (not shown in Figure 2). For example, a 4-way handshake procedure may be performed between the client device 110 and network device 120 to complete authentication and/or association of the client device 110. A pairwise master key (PMK) may be used for subsequent Wi-Fi™ Protected Access (WPA) handshake and configuration messages. In one embodiment, the shared key (SK) generated based on the network-provided nonce, the client-provided nonce, the network public key, and the client private key may be used as the PMK. Alternatively, the PMK can be derived from SK. The client device may derive the PMK using a predetermined function or algorithm having at least the SK as an input variable. Similarly, the network device may derive the PMK using the predetermined function or algorithm and the same SK. For example, the PMK can be a hash of the SK. The PMK can then be used for the 4-way handshake or further association/configuration steps between the client device and the network device.

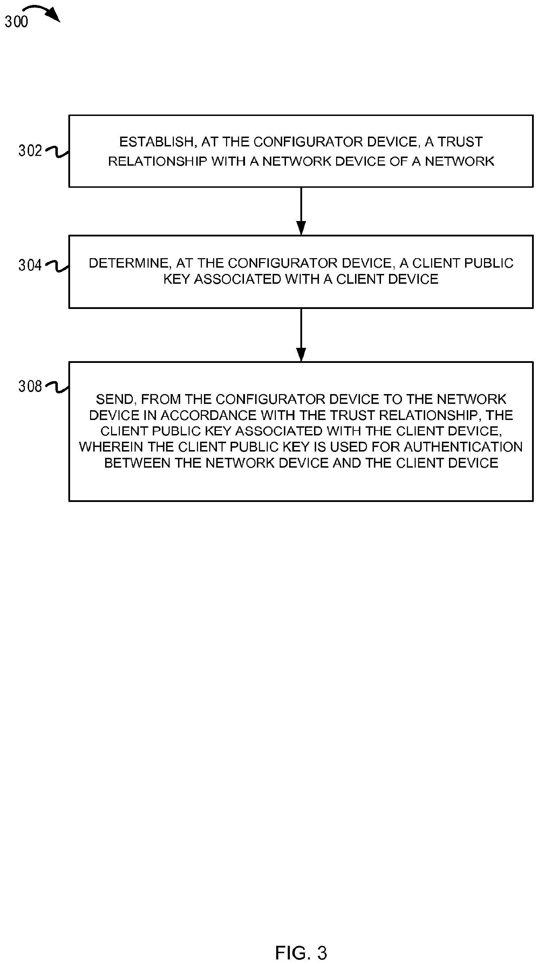

**Figure 3** depicts an example flow 300 of operations that may be performed by a configurator device (such as the configurator device 130), according to some embodiments. At block 302, the configurator device may establish a trust relationship with a network device of a network. Examples of establishing a trust relationship are provided in Figures 2 and 7.

At block 304, the configurator device may determine a client public key associated with a client device. For example, determining the client public key may include using a camera, microphone, light detector, scanner, short-range radio frequency interface (such as Bluetooth™ or NFC) or other sensor of the configurator device to detect the client public key using an out-of-band medium. In some embodiments, the method used to determine the client public key may require proximity between the configurator device and the client device, to protect from unintended remote access or security breach.

At block 308, the configurator device may send the client public key associated with the client device in accordance with the trust relationship, the client public key to be used for authentication between the network device and the client device.

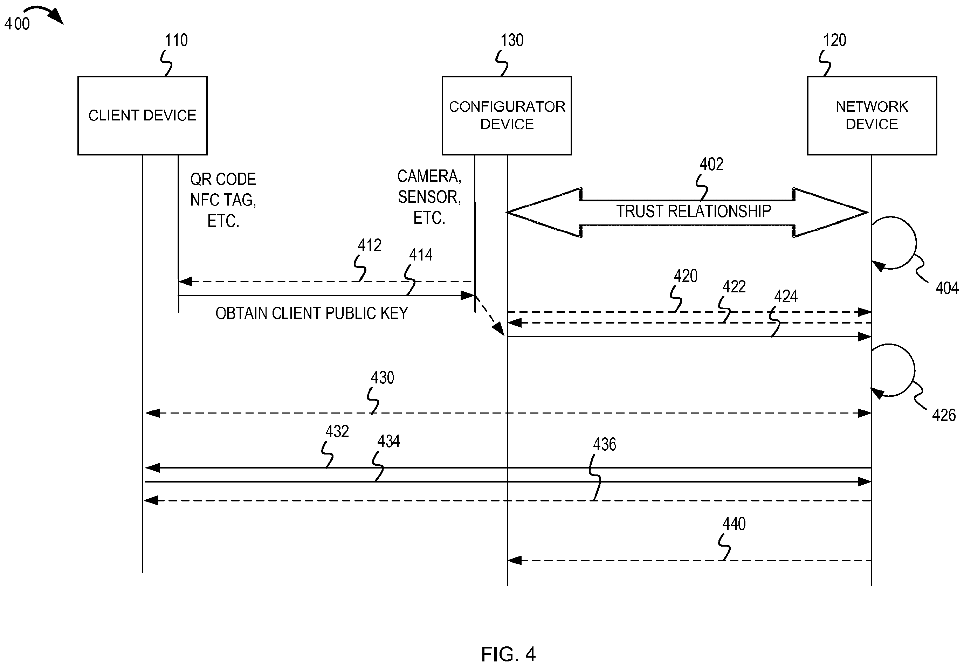

**Figure 4** is a message flow diagram illustrating an example of assisted device provisioning using a configurator device to provide a client public key to a network device, in accordance with embodiments of this disclosure In the example message flow 400 of Figure 4, a configurator device 130 may obtain the client public key 414 using a one-way out-of-band communication medium. The configurator device 130 has established a trust relationship 402 with the network device 120. In some embodiments, the trust relationship 402 may be preconfigured prior to when the configurator device obtains the client public key of the client device 110. Alternatively, the trust relationship 402 may be established responsive to or after the configurator device obtains the client public key associated with the client device 110.

Upon establishing the trust relationship 402, the network device 120 may store information 404 regarding the configurator device 130, such as a configurator public key, identifier, authorization period, or the like. The stored information 404 may be used later, such as to verify the authorization of the configurator device 130, and/or to assist with enrollment and authentication of the client device 110. For example, the stored information 404 may be used to decrypt or verify a signature provided by the configurator device 130 in an enrollment message.

The configurator device 130 may use an out-of-band medium to obtain the client public key 414 of the client device 110. For example, the client public key may be obtained via camera and image, short range radio frequency signals (such as Bluetooth or NFC) or other out-of-band medium. In some embodiments, the configurator device 130 may optionally query 412 the client device 110 to obtain the client public key 414. In some embodiments, the configurator device 130 may not query 412 the client device 110, such as when the client public key 414 is obtained by scanning a coded image. The client public key may be static or ephemeral. If the client public key is ephemeral, the client device 110 may generate a client public key and provide the client public key to the configurator device 130 responsive to the query 412. In other instances, the client public key may be static. If the out-of-band medium does not support bidirectional communication, the configurator device 130 may simply detect the client public key using a sensor, microphone, light detector, camera, or other capabilities of the configurator device.

The configurator device 130 may initiate an enrollment session by sending an enrollment request 420 to the network device 120. The network device 120 may send a response 422 with a nonce (which may also be referred to as an enrollment nonce or enrollment session identifier). The nonce may be a random or pseudorandom number provided by the network device 120. In some implementations, the nonce may be generated by the configurator device 130 and provided in the enrollment request 420, and acknowledged by the response 422. Use of a nonce may prevent so-called replay attacks which are a security breach using a previously used message exchange to introduce unauthorized data.

The configurator device 130 may provide the client public key of the client device 110 to the network device 120 in an enrollment message 424. As described previously, the enrollment message 424 may include other information such as a signature that is derived from the enrollment nonce. The signature may be used to verify (shown at verification procedure 426) the authority of the configurator device 130 before proceeding with enrollment of the client device 110. If verified, the client public key may be stored for use in an authentication process.

In response to the enrollment message 424 and verification of the signature, the network device 120 may perform an enrollment procedure 430. The enrollment procedure may include one or more of a beacon message, probe request message, a probe response message, an authentication begin message, an authentication initiation message, an association request, and an association response. These messages may be referred to as discovery steps that are used to establish an initial communication between the client device 110 and the network device 120, over which further authentication and configuration can occur. In one example, the enrollment procedure 430 includes the establishment of an authentication channel that can be used by an authentication protocol, such as extensible authentication protocol (EAP).

An example authentication process may include authentication request message 432 (similar to authentication request message 258) and an authentication response message 434 (similar to authentication response message 260). As described in Figure 2, the authentication process may include the use of a network-provided nonce (in authentication request message 432) and a client-provided nonce (in authentication response message 434) to determine a shared key between the client device 110 and the network device 120.

Following the authentication request message 432 and authentication response message 434, a configuration process may occur. For example, the network device 120 may transmit configuration data 436 to the client device 110. The configuration data 436 may include information such as an SSID of the access point, wireless channel information (such as a channel identifier), application layer keys, etc. In one example, the configuration data 436 may be secured based at least in part on the shared key. For example, the configuration data 436 may be encrypted using the shared key or a derivative of the shared key.

The shared key may also be used in a subsequent authentication process used for network access. For example, an additional authentication (not shown in Figure 1) may include a 4-way handshake procedure performed between the client device 110 and network device 120. The 4-way handshake procedure may be based upon a pairwise master key that is derived from the shared key.

The network device 120 may send a confirmation message 440 to the configurator device 130 to confirm that the client device 110 was successfully enrolled and/or authenticated to the network. Responsive to the confirmation message 440, the configurator device 130 may provide a visual, auditory, and/or other signal to alert the user that network enrollment and/or authentication was successfully completed.

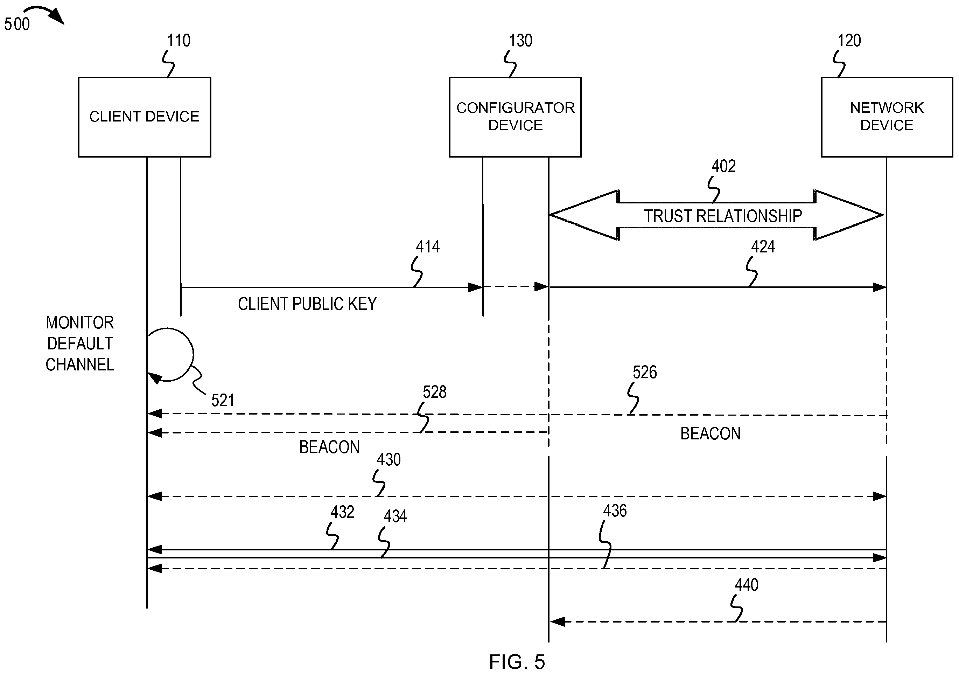

**Figure 5** is a message flow diagram illustrating an example of assisted device provisioning in which a client device monitors a default channel, in accordance with embodiments of this disclosure. In the example message flow 500 of Figure 5, a client device 110 is provisioned by a configurator device 130 or network device 120 over a temporary default channel. The configurator device 130 has established a trust relationship 402 with the network device 120. After establishing the trust relationship 402, the configurator device 130 may use an out-of-band medium to obtain (shown at 414) the client public key of the client device 110. For example, the configurator device 130 may scan a QR code associated with the client device 110. The configurator device 130 may send an enrollment message 424 having the client public key to the network device 120. In this example, the client device 110 is provisioned using a default channel. For example, the client device 110 may monitor 521 a default channel for a beacon message that initiates the device provisioning. In one embodiment, the client device 110 may monitor the default channel if it does not already have a network connection. Alternatively, the client device 110 may periodically monitor the default channel for a beacon message from any network device that wishes to provision the client device 110.

Either the network device 120 or the configurator device 130 may temporarily access the default channel to send a beacon message. For example, the network device 120 may send a beacon message 526 over the default channel. In another example, the configurator device 130 may send a beacon message 528 over the default channel. Other types of discovery messages, in addition to or in lieu of a beacon message, could be used. Device provisioning (e.g., enrollment and/or authentication) can continue as described previously (see corresponding descriptions of messages 430-440 in Figure 4).

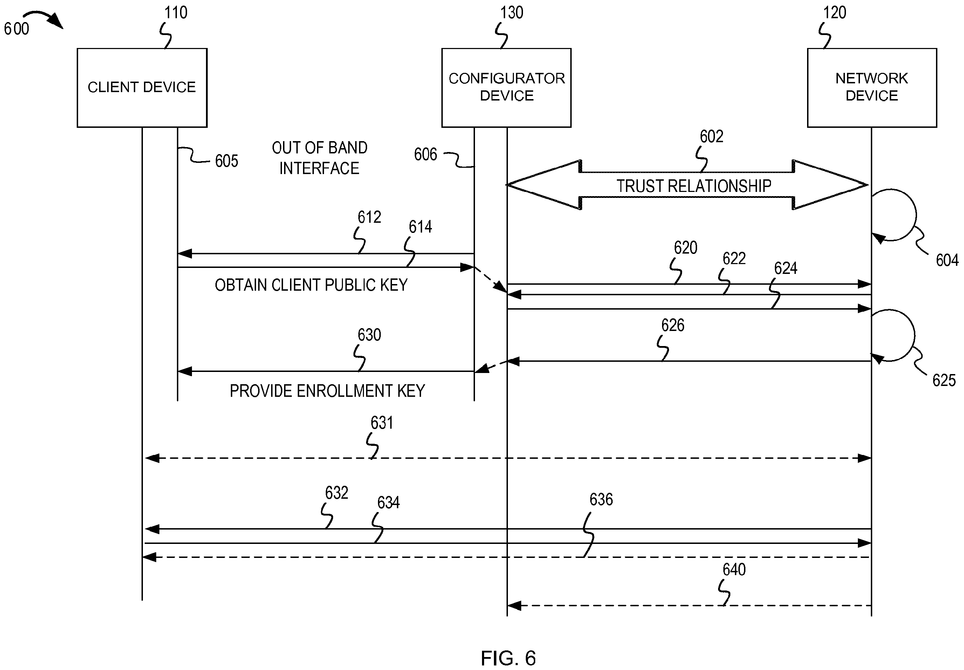

**Figure 6** is a message flow diagram illustrating an example of assisted device provisioning in which a configurator device provides an enrollment key to a client device, in accordance with embodiments of this disclosure. In the example message flow 600 of Figure 6, the configurator device 130 may obtain the client public key 614 using a bidirectional out-of-band communication medium. In this example, the configurator device 130 may also provide a network public key 630 (which may also be referred to as an enrollment public key).

The configurator device 130 has established a trust relationship 602 with the network device 120. After establishing the trust relationship 602, the network device 120 may store information 604 regarding the configurator device 130, such as a configurator public key, identifier, authorization period, or the like.

The configurator device 130 may use an out-of-band interface 606 to obtain the client public key of the client device 110 via an out-of-band medium and out-of-band interface 605. In the example of Figure 6, the out-of-band medium supports bidirectional communication. The out-of-band medium is different from the communication medium to which the network device 120 controls access. Therefore, the client device 110 and the configurator device 130 may be configured with an alternative communication interface, such as short range radio frequency interface, peer-to-peer wireless networking, directly wired medium, or other communications medium that supports bidirectional communication. The configurator device 130 may send a query message 612 to the client device 110 to obtain the client public key of the client device 110. In response to the query message 612, the client device 110 may respond with a response message 614 including the client public key.

Similar to the messages 420-424 in Figure 4, the configurator device 130 may send an enrollment request 620 to the network device 120, receive a response 622 with a nonce (which may also be referred to as an enrollment nonce or enrollment session identifier), and send an enrollment message 624 having the client public key and a signature based at least in part on the enrollment nonce. The signature may be used in verification procedure 625 to verify the authority of the configurator device 130 before proceeding with the enrollment of the client device 110. If verified, the client public key may be stored for use in an authentication process.

In the example of Figure 6, the network device 120 may provide an enrollment key 626 to the configurator device 130. The enrollment key 626 may also be referred to as a network public key associated with the network device 120. However, in the example of Figure 6, the enrollment key 626 is a one-time use enrollment key provided for the configurator device 130 to send to the client device 110 using the bidirectional two-way communications medium. The configurator device 130 provides the enrollment key 630 to the client device 110. The enrollment key may be a public key having a corresponding private key stored at the network device 120. In some examples, the configurator device 130 may send a network public key or an enrollment key that is previously known by the configurator device 130. For example, the network device 120 may provide an enrollment key to the configurator device 130 after establishing the trust relationship 602. The enrollment key may have an expiration time and/or may be unique to the particular configurator device 130. Alternatively, if provided in the message 626, the enrollment key could be specific to the client device 110.

At 631, the network device 120 may perform discovery steps to establish an initial communication between the client device 110 and the network device 120. The discovery steps may be modified to make use of the enrollment key. For example, the enrollment key (or a derivative thereof) may be used in a probe request message or a probe response message as a way to verify the identity of the client device 110 and/or the network device 120. Alternatively, the enrollment key (or a derivative thereof) may be included in a beacon message from the network device 120. If identify of the client device 110 or network device 120 cannot be verified, then the enrollment process may end, preventing further unnecessary communication or authentication from consuming processor or network resources.

Similar to Figures 2 and 4, the example authentication process may include authentication request message 632 and an authentication response message 634. Differently from Figure 4, in Figure 6, the authentication request message 632 may not include a network public key. As the configurator device 130 already provided the enrollment key to the client device 110 using the bidirectional out-of-band communications medium. Instead, the authentication request message 632 may include the network-provided nonce, but may not include the network public key. Next, as described in Figures 2 and 4, the authentication process may include the use of a network-provided nonce (in authentication request message 632), a client-provided nonce (in authentication response message 634) and their respective private keys and the other's public key to determine a shared key between the client device 110 and the network device 120. At 636, a configuration process may include the transmission of configuration data from the network device 120 to the client device 110.

The network device 120 may send a confirmation message 640 to the configurator device 130 to confirm that the client device 110 was successfully enrolled and authenticated to the network. Responsive to the confirmation message 640, the configurator device 130 may provide a visual, auditory, and/or other signal to alert the user that network enrollment and authentication was successfully completed.

**Figure 7** depicts an example message flow 700 for establishing a trust relationship between the configurator device 130 and the network device 120. The network device 120 may transmit a configurator support service advertisement message 702. The configurator support service advertisement message may be part of a beacon message or an overhead message. For example, the configurator support service advertisement message may be included in a message that indicates capabilities of the network device 120. The configurator support service advertisement message 702 may indicate to the configurator device 130 that the network device 120 supports the use of assisted enrollment and authentication, as described in this disclosure.

The configurator device 130 may use an out-of-band medium to obtain a network public key associated with the network device 120. For example, the configurator device 130 may send a query message 708 to the network device 120 to request the network public key. The network device 120 may provide the network public key in a response message 709. Alternatively, the configurator device 130 may simply use a camera, barcode scanner, short range radio frequency interface, or NFC tag reader to detect the network public key. In one example, the configurator device 130 obtains the network public key by decoding an image having machine-encoded data. The configurator device 130 may also obtain other information, such as an identifier (ID) or configuration information of the network device. In one embodiment, the identifier may be derived from the network public key. The configuration information might include default channel information.

The configurator device 130 and network device 120 may perform discovery steps 712, 714 to establish an initial communication between the configurator device 130 and the network device 120. The discovery steps 712, 714 may be similar to those described in Figures 4-6. The discovery steps may also be used to verify that the configurator device 130 and the network device 120 should continue with establishing the trust relationship. For example, the configurator device 130 may transmit a probe request message that includes the ID of the network device. The network device 120 may verify the ID matches the correct ID of the network device, and then respond with a probe response message. If the ID of network device 120 cannot be verified, then the network device 120 may discontinue communicating with the configurator device 130 and/or prevent the trust relationship from being established.

The configurator device 130 may send an authentication request message 716 to the network device 120 with an indication that the configurator device 130 would like authority to act as a configurator device for the network device 120. The authentication request message 716 may include the configurator public key and a configurator-provided nonce. Additionally, the authentication request message 716 may indicate other information, such as the method used to obtain the network public key, an identifier of the configurator device 130, or other information.

The network device 120 may use the configurator-provided nonce, configurator public key, a network-provided nonce, and a network private key, to determine a trust relationship key 625. The network device 120 may use the shared key to encrypt the network-provided nonce. Optionally, other information may also be encrypted with the network-provided nonce, such as a service set identifier (SSID) of a WLAN, or other network configuration information. For example, the network device 120 may generate a MAC based at least in part on the SSID and network-provided nonce.

At authentication response message 718, the network device 120 provides the network-provided nonce and the MAC to the configurator device 130. If the SSID was used to generate the MAC, the SSID may optionally be included in the authentication response message 718.

The configurator device 130 may use the network-provided nonce, configurator-provided nonce, configurator private key, and network public key to determine the trust relationship key 722. The configurator device 130 may use the trust relationship key to calculate a MAC to verify that the configurator-generated MAC matches the network-provided MAC in the authentication response message 718.

The network device 120 may store 732 the configurator public key, and optionally the trust relationship key for later use. For example, the configurator public key may be stored in a listing of authorized configurator devices. The configurator public key may be stored for a limited time and may be removed upon expiration of a time period. Alternatively, the configurator device may send a message (not shown) which indicates that it is no longer acting as a configurator device for the network. The network device may then remove the configurator public key and trust relationship key. The network device may be configured to remove all configurator public keys upon reboot or reset. Furthermore, the network device may limit the quantity of concurrently-approved configurator devices.

In one embodiment, the trust relationship may also be used to exchange configuration data. For example, one or more configuration messages 742, 744 may be transmitted to convey configuration data. In one example, the network device 120 may transmit the current configuration data 742 to the configurator device 130. In another example, the configurator device 130 may transmit new configuration data 744 to the network device 120.

In one embodiment, similar messages and procedures may be performed in a peer-to-peer environment between two devices. In other words, in one embodiment, the configurator device 130 and network device 120 of Figure 7 may be peer devices establishing a peer-to-peer relationship using similar messages that would be used to establish the described trust relationship above. In the peer-to-peer embodiment, the devices may perform a peer-to-peer discovery procedure and group negotiation prior to exchanging public keys. Often, in peer-to-peer environments one of the devices may act as a group manager, having similar functionality as the described network device 120.

In another embodiment, similar messages and procedures may be performed for device provisioning directly between a client device 110 and a network device 120. In other words, the configurator device 130 of Figure 7 may behave as a client device that is not yet provisioned for the network associated with network device 120. The client device may be establishing a network connection using similar messages that would be used to establish the described trust relationship above.

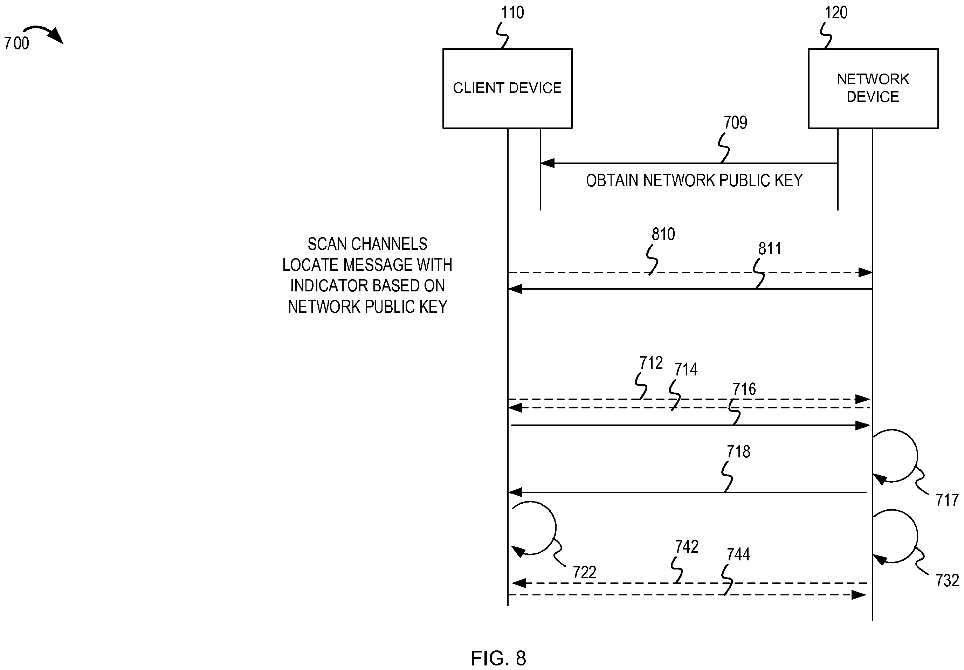

**Figure** 8 depicts another example of device provisioning in which a client device 110 and a network device 120 are illustrated. The client device 110 may obtain (at 709) the network public key of the network device 120. In Figure 8, the network public key is obtained via an out-of-band medium. For example, the client device 110 may scan a QR code associated with the network device 120, wherein the QR code includes the network public key encoded in the image. The network device 120 may include the network public key (or a derivative of it) in a first message 811 from the network device 120. For example, the first message 811 may be a service advertisement message, a probe response, an overhead message, or a beacon message. In one embodiment, a derivative (such as a hash) of the network public key may be included in the first message 811. The client device 110 may passively scan a plurality of channels until identifying a channel with the first message 811 having the network public key (or derivative). In this way, the client device 110 can identify the proper channel to continue the provisioning process. The provisioning process (shown at 712-744) may be similar to the process described in Figure 7.

In another embodiment of Figure 8, the client device 110 may use an active scan at a plurality of channels to identify a channel managed by the network device 120. The client device 110 may send a probe request message 810 and receive a probe response (as the first message 811). If the probe response includes the network public key (or a derivative of the network public key), the client device 110 may identify that channel as the proper channel to continue the device provisioning.

As described above, the messages described in Figures 7-8 could be used for various scenarios, including the establishment of a trust relationship for a configurator device, the creation of a peer-to-peer network, or the connection of a new client device to a network. In Figure 7, after an initial discovery process, two devices exchange public keys. The public keys are used with private keys on each device to determine a derivative key used for provisioning one device for the other device. As noted in previous figures, a third device (e.g., configurator device 130) may be used as an intermediary between the first and second devices (e.g., client device 110 and network device 120). The following Figures provide further examples of an intermediary device that performs similar features as described above with regard to configurator device 130.

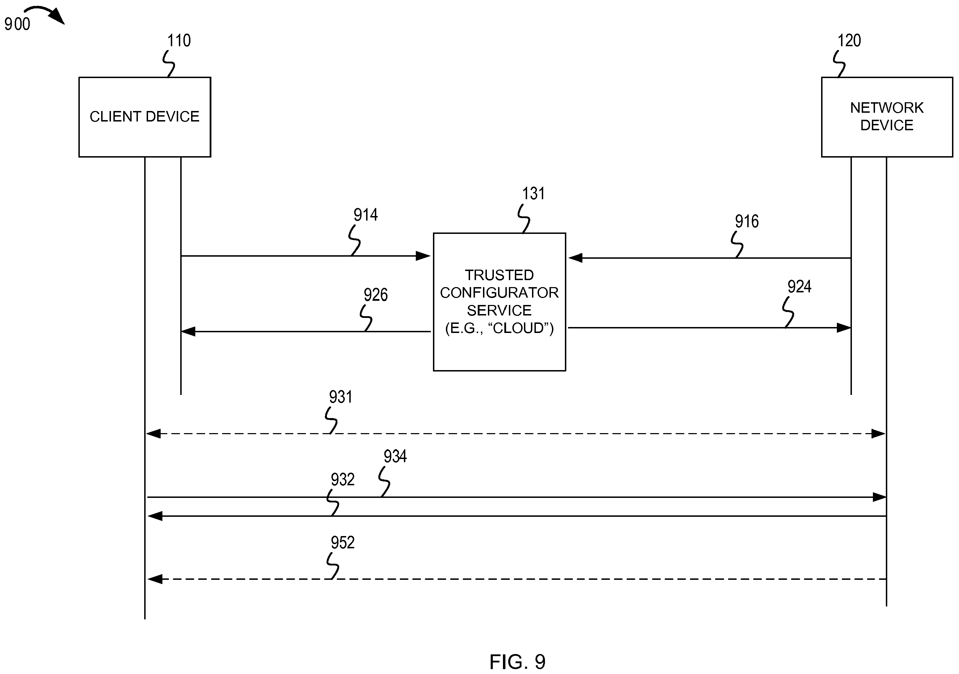

**Figure 9** depicts an example system 900 in which the functionality of a configurator device may be implemented in a trusted configurator service 131 such as a network based (e.g., "cloud) service. Figure 9 includes a client device 110 and network device 120. Initially, the client device 110 is considered not enrolled with the network device 120.

Using an out-of-band communication medium, the client device 110 may provide the client public key (in first message 914) to the trusted configurator service 131. The trusted configurator service 131 may provide the client public key (in second message 924) to the network device 120. Similarly, the network device 120 may provide the network public key (in third message 916) to the trusted configurator service 131. The trusted configurator service 131 may provide the network public key (in fourth message 926) to the client device 110.

The trusted configurator service 131 may serve as a public key clearinghouse or key authority. In one embodiment, the client device 110 and network device 120 may provide the client public key and network public key, respectively, prior to any potential association between the client device 110 and network device 120. For example, the trusted configurator service 131 may be a cloud-based repository storing the public keys of multiple client devices and network devices, such that a relationship can be established between a particular client device and particular network device simply by managing the distribution of the public keys.

In one embodiment, the trusted configurator service 131 may establish a trust relationship with one or both of the client device 110 and network device 120. The client public key and network public key could be provided using a secure communications link in accordance with the trust relationship.

Either the client device 110 or network device 120 may initiate the enrollment process 931 based on the received public key from the trusted configurator service 131. The enrollment process 931 may include the discovery steps, as described in Figures 4-8. Following the discovery steps, the client device 110 may initiate the authentication process by sending an authentication request message 934 to the network device 120. The authentication request message 934 may include a client-provided nonce, and optionally may include additional information regarding the client device 110. The network device 120 may generate a network-provided nonce, and use the network-provided nonce, client-provided nonce, the network private key, and the client public key (from the trusted configurator service 131) to determine the shared key. In the authentication response message 932, the network device 120 may include the network-provided nonce as well as a MAC based at least in part on the shared key.

The client device 110 may use the network-provided nonce, client-provided nonce, client private key, and network public key to determine the same shared key. The shared key is verified by generating a MAC and comparing the client-generated MAC with the received MAC.

Following enrollment and authentication, the network device 120 may provide configuration data 952 to the client device 110. Additionally, additional authentication (such as a 4-way handshake or establishment of a PMK) may be performed (not shown).

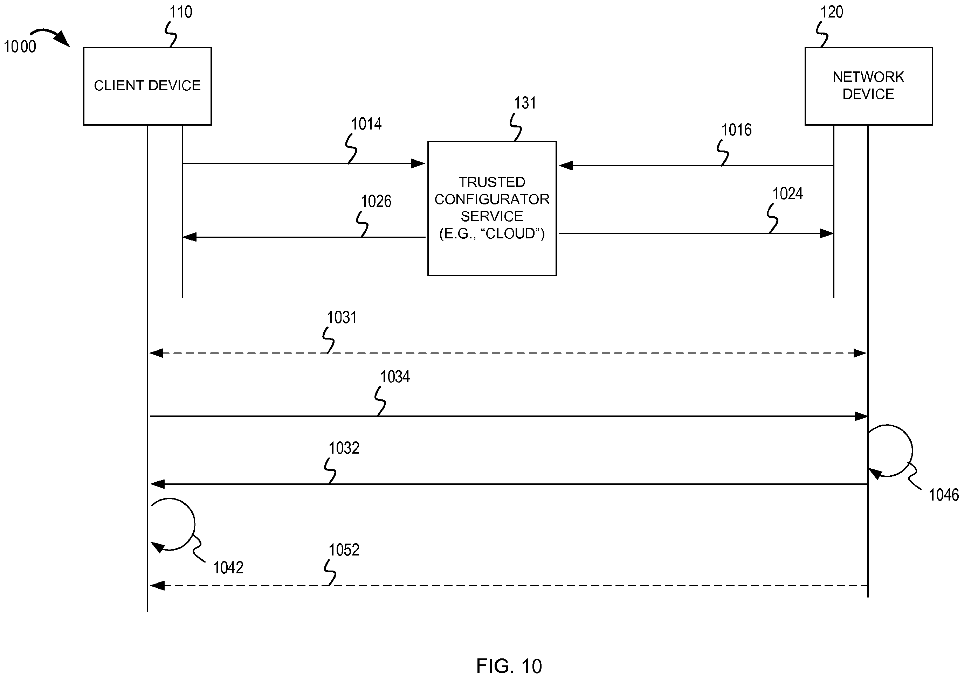

**Figure 10** depicts another example system 1000 in which a configurator service 131 may assist with authentication between a client device 110 and network device 120. In one example, the configurator service 131 may be a trusted service (e.g., in the cloud). In an embodiment, the trusted configurator service 131 may provide additional trust certification of the client public key and network public key. A certification includes the "signing" or certification of a parcel of information by encrypting the parcel of information using a private key. As a result of the certification process, a "certificate" may be generated.

Using an out-of-band communication medium, the client device 110 may provide the client public key (in first message 1014) to the trusted configurator service 131. The trusted configurator service 131 may sign the client public key using a configurator private key to generate a client certificate. The client certificate can be verified using the configurator public key which may be known to the client device and the network device.

Similarly, the network device 120 may provide the network public key (in second message 1016) to the trusted configurator service 131. The trusted configurator service 131 may also generate a network certificate by signing the network public key with the configurator private key.

The trusted configurator service 131 may send the configurator public key and the network certificate in third message 1024 to the network device 120. The configurator public key may also be referred to as a certificate authority (CA) public key. The trusted configurator service 131 may send the configurator public key and the client certificate in fourth message 1026 to the client device 110. Therefore, each of the client device and network device will have the configurator public key, as well as a configurator-certified copy of their own public key. Each of the client certificate and network certificate may include a signature provided by the trusted configurator service 131. The signature may be computed based on a portion of the certificate and the configurator private key. For example, a data portion of the certificate may be used to create a message digest or hash. The message digest or hash may then be encrypted using a configurator private key to produce the signature. The signature may be added as a second portion of the certificate.

Either the client device 110 or network device 120 may initiate enrollment responsive to receiving the configurator-certified copy of their own public key and verifying the authenticity of the signature. The enrollment may begin with discovery steps 1031 to establish an initial communication channel between the client device 110 and the network device 120 over which an authentication protocol may be used. The authentication protocol may include an authentication request message 1034 and authentication response message 1032.

The client device 110 may include the client certificate and a client-provided nonce in the authentication request message 1034. Upon receiving the client certificate, the network device 120 may verify the client certificate at verification procedure 1046. For example, the network device 120 may use a configurator public key to verify the client certificate. To verify that the certificate was issued by the trusted configurator service 131, a recipient device may use the configurator public key to decrypt the signature to obtain the signature message digest or hash. The recipient device can then compute a received message digest or hash from the data portion and compare the received message digest/hash with the signature message digest/hash. The network device 120 can determine the shared key. For example, the network device 120 may generate a network-provided nonce and determine the shared key using the client-provided nonce, the client public key extracted from the client certificate, the network private key, and the network-provided nonce.

In the authentication response message 1032, the network device 120 may include the network-provided nonce, the network certificate, and a MAC of the client-provided nonce. The MAC of the client-provided nonce may be a cryptographic hash function of the client-provided nonce that has been prepared using the shared key.

At verification procedure 1042, the client device may verify the network certificate using the configurator public key. If verified, the client device 110 can use the network public key stored in the network certificate and generate the same shared key using the network-provided nonce, client-provided nonce, network public key, and client public key, using a similar process used by the network device 120.

Once the shared key has been obtained, the client device 110 and network device 120 may use the shared key for subsequent 4-way handshake authentication and/or configuration steps 1052.

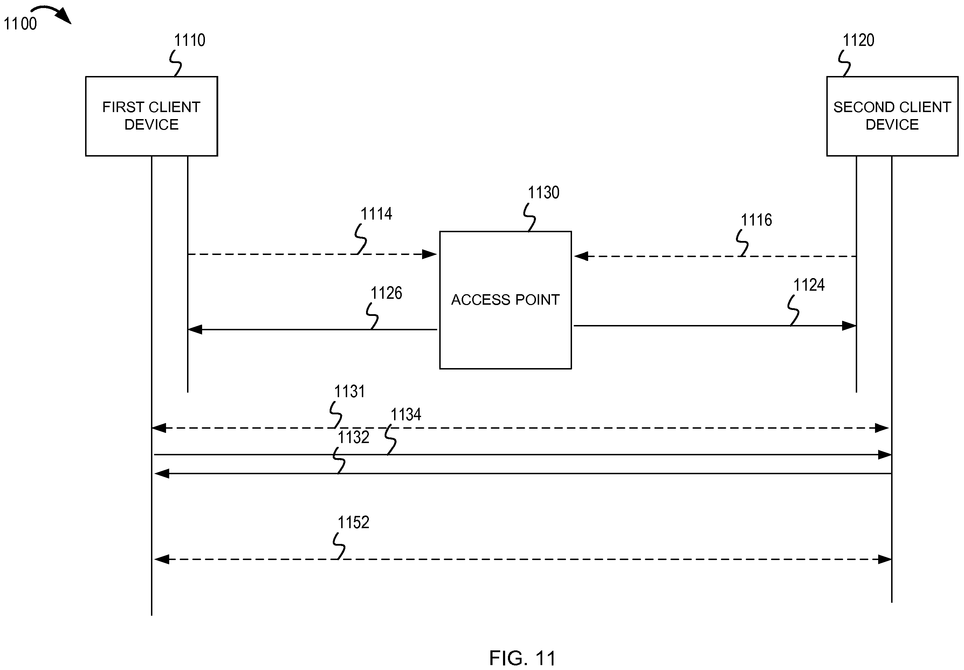

**Figure 11** depicts another example system 1100 in which a configurator device may be embodied as an access point 1130 to facilitate a direct peer-to-peer wireless connection between a first client device 1110 and a second client device 1120. Initially, the first client device 1110 and the second client device 1120 may have a wireless association with access point 1130 but may not have a direct peer-to-peer wireless association with each other.

The access point 1130 may be configured to provide public keys to the first and second client devices 1110, 1120. In one embodiment, the access point 1130 may obtain the first client public key (in first message 1114) from the first client device 1110 and provide the first client public key (in second message 1124) to the second client device 1120. The access point 1130 may obtain the second client public key (in third message) 1116 from the second client device 1120 and provide the second client public key (in fourth message 1126) to the first client device 1110. In another embodiment, the access point 1130 may be configured to generate one or more ephemeral client public keys and provide them to the first and second client devices 1110, 1120. For example, the access point 1130 may generate a first client public key and send the first client public key to the second client device 1120. The access point 1130 may generate a second client public key and send the second client public key to the first client device 1110. Either, or both, of the first client public key and second client public key can be ephemeral client public keys generated by the access point 1130.

Either the first client device 1110 or second client device 1120 may initiate the enrollment process 1131 based on the received client public keys from the access point 1130. In one example, the first client device 1110 may initiate the authentication process by sending an authentication request message 1134 to the second client device 1120. The authentication request message 1134 may include a first nonce, and optionally may include additional information regarding the first client device 1110. The second client device 1120 may generate a second nonce, and use the second nonce, first nonce, and the first client public key to determine a shared key. In the authentication response message 1132, the second client device 1120 may include the second nonce as well as a MAC based at least in part on the shared key.

The first client device 1110 may use the first nonce, second nonce, and the second client public key 1126 to determine the same shared key. The shared key is verified by generating a verification MAC and comparing the verification MAC with the received MAC.

Following enrollment and authentication, the second client device 1120 or the first client device 1110 may provide configuration data 1152 for the peer-to-peer wireless connection. Additionally, additional authentication (such as a 4-way handshake or establishment of a PMK) may be performed (not shown).

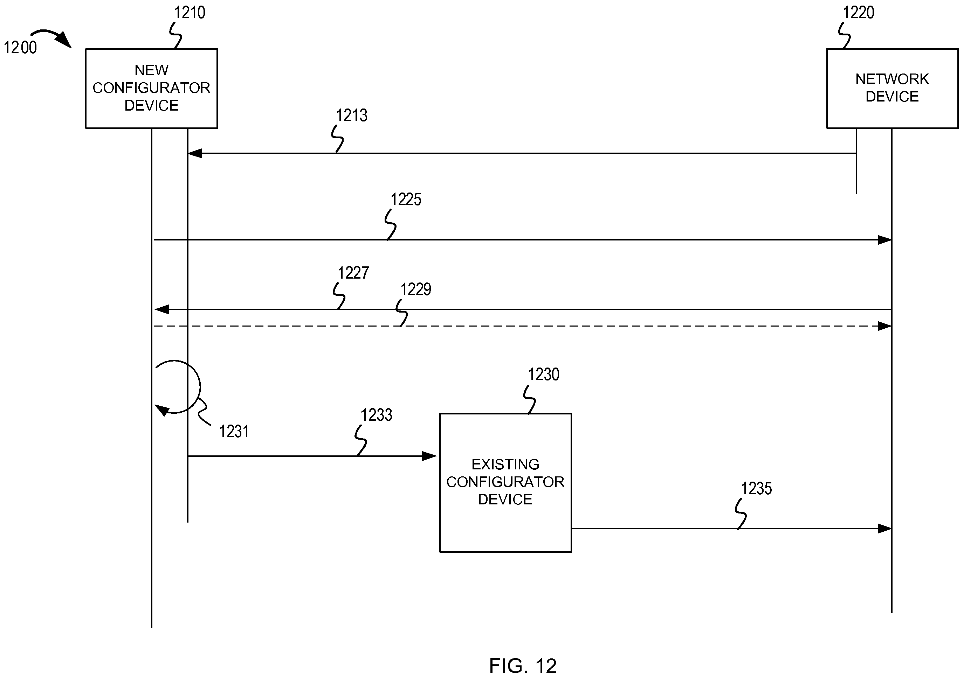

**Figure 12** is a message process diagram 1200 illustrating adding a new configurator device 1210 to a network, where an existing configurator device 1230 is already present. The network includes a network device 1220 which can provide a network public key 1213 via an out-of-band medium to the new configurator device 1210. For example, the new configurator device 1210 may scan a QR code associated with the network device 1220. The new configurator device 1210 may include the network public key in an enrollment message 1225 to the network device 1220. The network device 1220 may determine that an existing configurator device is already present and may send a response message 1227 indicating that an existing configurator device 1230 has already been provisioned. In one embodiment, the response message 1227 may provide an indicator (e.g., name or location) of the existing configurator device 1230. The new configurator device 1210 may optionally send an acknowledgement 1229 in reply to the response message 1227.

The new configurator device 1210 may provide a QR code 1231 and instruct the user to have the QR code scanned by the existing configurator device 1230. The QR code may have a device public key associated with the new configurator device 1210. The device public key is provided to the existing configurator device 1230 (e.g., the existing configurator device 1230 scans 1233 the QR code provided by the new configurator device 1210). The existing configurator device 1230 may provide the device public key (in trusted message 1235) to the network device 1220 using an existing trust relationship between the existing configurator device 1230 and the network device 1220. In response to receiving the device public key, the network device 1220 may enroll the new configurator device 1210 and add it to a list of configurator devices.

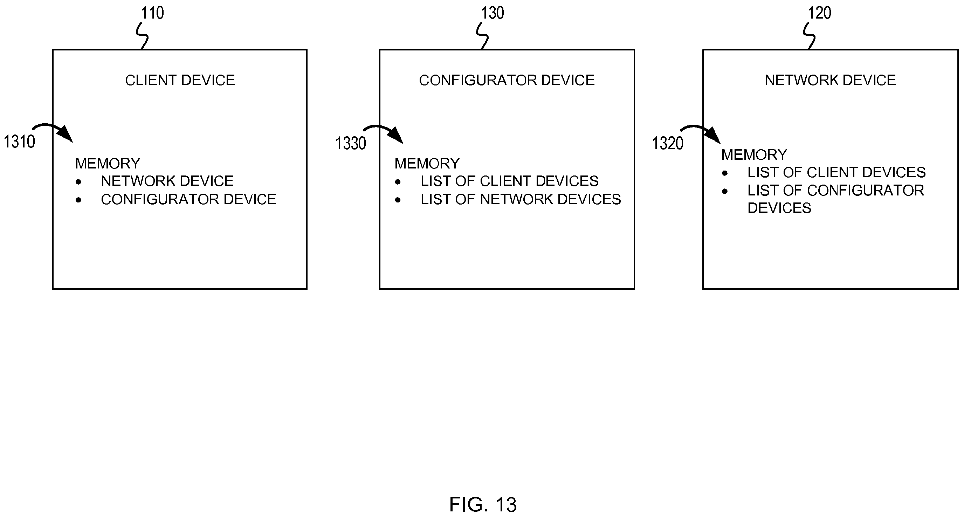

**Figure 13** is a conceptual diagram illustrating public key lists that may be maintained by various devices in accordance with an embodiment of this disclosure. In Figure 13, the client device 110 may have memory 1310 for storing the public keys associated with at least one network device. The memory 1310 may also store the public key of a configurator device. In one embodiment, the memory 1310 may store public keys for more than one network device, such as when the client device 110 is provisioned for accessing different networks based on coverage or user selection.

The configurator device 130 may have memory 1330 for storing public keys for a list of client devices that are provisioned for the network. The list of client devices may be shared with a new network device (not shown) when a new network device is added to the network. The memory 1330 may also store the public keys for a list of network devices associated with the network. The public keys for the list of network devices may be used to verify requests from a network device.

The network device 120 may have memory 1320 for storing public keys associated with a list of client devices and public keys for a list of configurator devices. When a new network device is added to the network, the public keys for the list of client devices may be shared to the new network device so that the new network device can automatically enroll the client devices. The public keys for the list of configurator devices can also be shared with a new network device so that the new network device can verify enrollment requests received by configurator devices of the network.

Using the examples in Figure 13, it can be understood that the lists (and associated public keys) may be used to manage access in a network. For example, when a user causes a client device to be removed from the list of client devices at a configurator device, the changes may be propagated to other configurator devices and network devices. Using Figure 13 as the example, the configurator device 130 may send a message to the network device 120 to cause the network device 120 to remove the public key for client device 110 from the list of client devices in memory 1320. Thereafter, the client device 110 would not be provisioned for the network.

Figures 1-13 and the operations described herein are examples meant to aid in understanding various embodiments and should not be used to limit the scope of the claims. Embodiments may perform additional operations, fewer operations, operations in parallel or in a different order, and some operations differently. While this disclosure enumerates several embodiments, additional embodiments are considered within the scope of this disclosure. For example, in one embodiment, a method for authenticating a client device with a network device comprises facilitating, via a configurator device, an authentication between the client device and the network device, the authentication based at least in part on a client public key of the client device shared from the client device to the network device via the configurator device, the configurator device using out-of-band communications to obtain the client public key.

As will be appreciated by one skilled in the art, aspects of the present disclosure may be embodied as a system, method, or computer program product. Accordingly, aspects of the present disclosure may take the form of an entirely hardware embodiment, a software embodiment (including firmware, resident software, micro-code, etc.) or an embodiment combining software and hardware aspects that may all generally be referred to herein as a "circuit," "unit" or "system." Furthermore, aspects of the present disclosure may take the form of a computer program product embodied in one or more computer readable medium(s) having computer readable program code embodied thereon.

Any combination of one or more computer readable medium(s) may be utilized, with the sole exception being a transitory, propagating signal. The computer readable medium may be a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Computer program code embodied on a computer readable medium for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

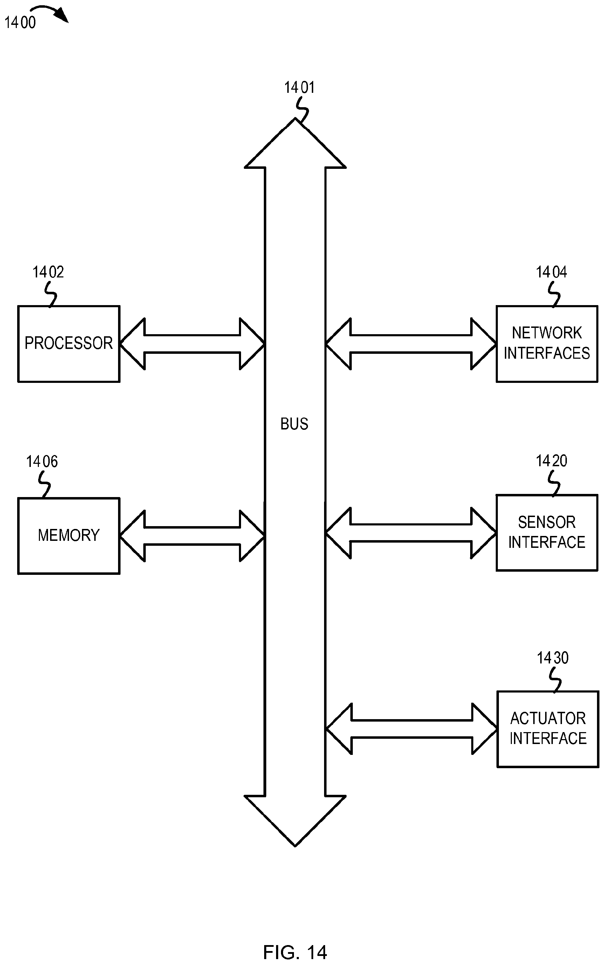

**Figure 14** is an example block diagram of one embodiment of an electronic device 1400 capable of implementing various embodiments of this disclosure. In some implementations, the electronic device 1400 may be an electronic device such as a laptop computer, a tablet computer, a mobile phone, a gaming console, or other electronic system. The electronic device 1400 includes a processor 1402 (possibly including multiple processors, multiple cores, multiple nodes, and/or implementing multi-threading, etc.). The electronic device 1400 includes a memory 1406. The memory 1406 may be system memory (e.g., one or more of cache, SRAM, DRAM, zero capacitor RAM, Twin Transistor RAM, eDRAM, EDO RAM, DDR RAM, EEPROM, NRAM, RRAM, SONOS, PRAM, etc.) or any one or more of the above already described possible realizations of machine-readable media. The electronic device 1400 also includes a bus 1401 (e.g., PCI, ISA, PCI-Express, HyperTransport®, InfiniBand®, NuBus, AHB, AXI, etc.). The electronic one or more network interfaces that may be a wireless network interface (e.g., a WLAN interface, a Bluetooth® interface, a WiMAX interface, a ZigBee® interface, a Wireless USB interface, etc.) or a wired network interface (e.g., a powerline communication interface, an Ethernet interface, etc.). In some implementations, electronic device 1400 may support multiple network interfaces 1404 - each of which may be configured to couple the electronic device 1400 to a different communication network.

The memory 1406 embodies functionality to implement embodiments described above. The memory 1406 may include one or more functionalities that facilitate assisted enrollment and authentication. For example, memory 1406 can implement one or more aspects of client device 110, network device 120, or configurator device 130 as described above. The memory 1406 can embody functionality to implement embodiments described in Figures 1 - 13 above. In one embodiment, memory 1406 can include one or more functionalities that facilitate sending and receiving keys, authentication messages, and the like.

The electronic device 1400 may also include a sensor interface 1420, actuator interface 1430 or other input/output component. In other embodiments, electronic device 1400 may have other appropriate sensors (e.g., a camera, microphone, NFC detector, barcode scanner, etc.) used to determine the network public key and/or the client public key.

Any one of these functionalities may be partially (or entirely) implemented in hardware and/or on the processor 1402. For example, the functionality may be implemented with an application specific integrated circuit, in logic implemented in the processor 1402, in a co-processor on a peripheral device or card, etc. Further, realizations may include fewer or additional components not illustrated in Figure 14 (e.g., video cards, audio cards, additional network interfaces, peripheral devices, etc.). The processor 1402, and the memory 1406, may be coupled to the bus 1401. Although illustrated as being coupled to the bus 1401, the memory 1406 may be directly coupled to the processor 1402.

While the embodiments are described with reference to various implementations and exploitations, it will be understood that these embodiments are illustrative and that the scope of the present disclosure is not limited to them. In general, techniques for device provisioning as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the present disclosure. In general, structures and functionality presented as separate components in the exemplary configurations may be implemented as a combined structure or component. Similarly, structures and functionality presented as a single component may be implemented as separate components. These and other variations, modifications, additions, and improvements may fall within the scope of the present disclosure.

**In the following, further embodiments are described to facilitate the understanding of the invention:**
1. A method for provisioning a client device with a network device, the method comprising:
   establishing, at a configurator device, a trust relationship with the network device;
   determining, at the configurator device, a client public key associated with the client device; and
   sending, from the configurator device to the network device in accordance with the trust relationship, the client public key, wherein an authentication between the network device and the client device is based at least in part on the client public key.
2. The method of embodiment 1, further comprising:
   sending, from the configurator device or the network device to the client device, a network public key associated with the network device, wherein the authentication between the network device and the client device is further based at least in part on the network public key.
3. The method of embodiment 1, wherein establishing the trust relationship comprises:
   determining a network public key associated with the network device;
   sending a configurator public key to the network device, the configurator public key corresponding to a configurator private key; and
   determining a trust relationship key associated with the trust relationship based at least in part on the network public key and the configurator private key.
4. The method of embodiment 3, further comprising:
   encrypting the client public key with the trust relationship key prior to sending the client public key from the configurator device to the network device.
5. The method of embodiment 3, wherein determining the network public key associated with the network device comprises:
   receiving the network public key via a secure connection with the network device.
6. The method of embodiment 3, wherein determining the network public key associated with the network device comprises:
   determining the network public key via an out-of-band connection with the network device that is different from a connection that the client device will establish with the network device.
7. The method of embodiment 3, wherein establishing the trust relationship comprises:
   receiving a configurator support service advertisement from the network device prior to determining the network public key associated with the network device.
8. The method of embodiment 3, wherein determining the network public key associated with the network device comprises:
   detecting the network public key using at least one member of the group consisting of a camera, a microphone, a light detector, a sensor, and a short-range radio frequency interface of the configurator device.
9. The method of embodiment 8, wherein detecting the network public key using the camera comprises using the camera to detect an image associated with the network device, wherein at least a portion of the image includes the network public key.
10. The method of embodiment 1, wherein determining the client public key associated with the client device comprises:
   detecting the client public key using at least one member of the group consisting of a camera, a microphone, a light detector, a sensor, and a short-range radio frequency interface of the configurator device.
11. The method of embodiment 10, wherein detecting the client public key using the camera comprises using the camera to detect an image associated with the client device.
12. The method of embodiment 1, wherein sending the client public key associated with the client device comprises:
   sending a request message to the network device;
   receiving a nonce from the network device; and
   sending an enrollment message to the network device, the enrollment message including the client public key and a configurator signature, wherein the configurator signature provides authentication to the network device that the configurator device is authorized to send the enrollment message.
13. The method of embodiment 12, wherein the configurator signature is either derived from the nonce and a configurator private key or is based, at least in part, on a trust relationship key associated with the trust relationship.
14. The method of embodiment 12, further comprising:
   receiving an enrollment key from the network device; and
   sending the enrollment key to the client device, wherein the enrollment key is used with the client public key for the authentication between the network device and the client device.
15. The method of embodiment 1, further comprising:
   sending configuration data from the configurator device to the network device after establishing the trust relationship.
16. The method of embodiment 1, further comprising:
   sending configuration data from the configurator device to the client device to aid the client device in associating with the network device.
17. The method of embodiment 16, wherein sending the configuration data comprises:
   transmitting a first message on a default channel accessible by the client device.
18. The method of embodiment 17, wherein the first message includes identity information based, at least in part, on either the client public key or a network public key associated with the network device.
19. The method of embodiment 1, wherein the client device is a first client device, the network device is a second client device, and the configurator device is an access point.
20. The method of embodiment 1, wherein the network device is an access point of a network, and wherein the configurator device is associated with the access point.
21. The method of embodiment 1, further comprising:
   maintaining a list of network devices and a corresponding network public key for each of the list of network devices.
22. A method for a network device to authenticate a client device, the method comprising:
   establishing, at the network device, a trust relationship with a configurator device; and
   receiving, from the configurator device in accordance with the trust relationship, a client public key associated with the client device; and
   using the client public key for authentication between the network device and the client device.
23. The method of embodiment 22, wherein establishing the trust relationship comprises providing a network public key associated with the network device to the configurator device or the client device, the network public key having a corresponding network private key.
24. The method of embodiment 23, wherein providing the network public key associated with the network device comprises providing the network public key using a display or short-range radio frequency interface of the network device.
25. The method of embodiment 22, further comprising:
   transmitting a first message on a default channel, wherein the first message includes information derived from either the client public key or a network public key associated with the network device.
26. The method of embodiment 22, further comprising:
   determining a shared key for use with the client device, the shared key based at least in part on the client public key and a network private key.
27. The method of embodiment 22, further comprising:
   receiving a configurator public key from the configurator device; and
   determining a trust relationship key associated with the trust relationship based at least in part on a network private key and the configurator public key.
28. The method of embodiment 27, wherein receiving the client public key includes receiving the client public key having been encrypted with the trust relationship key.
29. The method of embodiment 22, wherein establishing the trust relationship comprises:
   transmitting a configurator support service advertisement from the network device.
30. The method of embodiment 22, wherein receiving the client public key associated with the client device comprises:
   receiving a request message from the configurator device;
   sending a nonce to the configurator device; and
   receiving an enrollment message from the configurator device, the enrollment message including the client public key and a configurator signature derived, at least in part, from the nonce and a configurator private key.
31. The method of embodiment 30, further comprising:
   authenticating the enrollment message based, at least in part, on the configurator signature and a configurator public key.
32. The method of embodiment 30, further comprising:
   sending an enrollment key from the network device; and
   using the enrollment key with the client public key for the authentication between the network device and the client device.
33. The method of embodiment 22, further comprising:
   sending configuration data from the network device to the client device after using the client public key for authentication between the network device and the client device.
34. The method of embodiment 22, further comprising:
   maintaining, at the network device, a list of client devices and a corresponding client public key for each of the list of client devices.
35. The method of embodiment 34, further comprising:
   upon determining a change to the list of client devices, sending a notification of the change to another network device.
36. The method of embodiment 22, further comprising:
   maintaining, at the network device, a list of configurator devices and a corresponding trust relationship key for each of the list of configurator devices.
37. A method for a client device to authenticate with a network device, the method comprising:
   receiving a first nonce and a network public key associated with the network device;
   generating a second nonce;
   determining a shared key based at least in part on a calculation that includes the first nonce, the second nonce, the network public key, and a client private key associated with the client device, wherein the client private key corresponds to a client public key associated with the client device; and
   sending an authentication response having a least a portion that is derived from the shared key, wherein the authentication response includes the second nonce.
38. The method of embodiment 37, wherein the shared key matches a corresponding shared key at the network device, the corresponding shared key based at least in part on a corresponding calculation, at the network device, that includes the first nonce, the second nonce, a network private key, and the client public key.
39. The method of embodiment 37, further comprising:
   sending the client public key to a configurator device having a trust relationship with the network device.
40. The method of embodiment 37, wherein the authentication response confirms to the network device that the client device has obtained the network public key.
41. The method of embodiment 37, wherein the network public key is received from a configurator device having a trust relationship with the network device.
42. The method of embodiment 37, further comprising:
   monitoring a default channel for a first message having configuration data; and
   receiving the first message on the default channel, wherein the configuration data includes information for the client device to associate with the network device.
43. The method of embodiment 42, wherein the first message includes identity information based, at least in part, on either the client public key or the network public key.
44. A method for authenticating a client device with a network device comprises:
   determining, at a configurator device, a first public key associated with one of the client device or the network device;
   generating, at the configurator device, a first certificate based on the first public key and a configurator private key; and
   sending the first certificate to the one of the client device or the network device to facilitate an authentication process between the client device and the network device.
45. The method of embodiment 44, further comprising:
   determining, at the configurator device, a second public key associated with the other one of the client device or the network device;
   generating, at the configurator device, a second certificate based on the second public key and the configurator private key; and
   sending the second certificate to the other one of the client device or the network device to facilitate the authentication process between the client device and the network device.
46. The method of embodiment 44, wherein the first certificate verifies identity of the one of the client device or the network device, and wherein the authentication process is based a shared key derived, at least in part, from the first certificate.
47. A configurator device, comprising:
   a processor; and
   memory for storing instructions which, when executed by the processor, cause the processor to:
      establish, at the configurator device, a trust relationship with a network device;
      determine, at the configurator device, a client public key associated with a client device; and
      send, from the configurator device to the network device in accordance with the trust relationship, the client public key, wherein an authentication between the network device and the client device is based at least in part on the client public key.
48. The configurator device of embodiment 47, wherein the instructions, when executed by the processor, cause the processor to:
   send, from the configurator device or the network device to the client device, a network public key associated with the network device, wherein the authentication between the network device and the client device is further based at least in part on the network public key.
49. The configurator device of embodiment 47, wherein the instructions, when executed by the processor, cause the processor to:
   determine a network public key associated with the network device;
   send a configurator public key to the network device, the configurator public key corresponding to a configurator private key; and
   determine a trust relationship key associated with the trust relationship based at least in part on the network public key and the configurator private key.
50. The configurator device of embodiment 49, further comprising:
   an interface for establishing an out-of-band connection with the network device that is different from a connection that the client device will establish with the network device; and
   wherein the instructions to determine the network public key comprise instructions that, when executed by the processor, cause the processor to determine the network public key via the out-of-band connection with the network device.
51. The configurator device of embodiment 50, wherein the interface comprises a member of the group consisting of a camera, a microphone, a light detector, a sensor, and a short-range radio frequency interface.
52. The configurator device of embodiment 47,
   an interface comprising at least one member of the group consisting of a camera, a microphone, a light detector, a sensor, and a short-range radio frequency interface of the configurator device; and
   wherein the instructions to determine the client public key comprise instructions that, when executed by the processor, cause the processor to detect the client public key using the interface.
53. The configurator device of embodiment 47, wherein the instructions to send the client public key comprises instructions that, when executed by the processor, cause the processor to:
   send a request message to the network device;
   receive a nonce from the network device; and
   send an enrollment message to the network device, the enrollment message including the client public key and a configurator signature, wherein the configurator signature provides authentication to the network device that the configurator device is authorized to send the enrollment message.
54. The configurator device of embodiment 53, wherein the instructions, when executed by the processor, cause the processor to:
   receive an enrollment key from the network device; and
   send the enrollment key to the client device, wherein the enrollment key is used with the client public key for the authentication between the network device and the client device.
55. The configurator device of embodiment 47, wherein the instructions, when executed by the processor, cause the processor to:
   send configuration data from the configurator device to the client device to aid the client device in associating with the network device.
56. The configurator device of embodiment 55, wherein the instructions to send the configuration data comprises instructions that, when executed by the processor, cause the processor to:
   transmit a first message on a default channel accessible by the client device.
57. The configurator device of embodiment 56, wherein the first message includes identity information based, at least in part, on either the client public key or a network public key associated with the network device.
58. The configurator device of embodiment 47, further comprising:
   memory for maintaining a list of network devices and a corresponding network public key for each of the list of network devices.
59. A network device, comprising:
   a processor; and
   memory for storing instructions which, when executed by the processor, cause the processor to:
      establish, at the network device, a trust relationship with a configurator device; and
      receive, from the configurator device in accordance with the trust relationship, a client public key associated with a client device; and
      utilize the client public key for authentication between the network device and the client device.
60. The network device of embodiment 59, wherein the instructions to establish the trust relationship comprises instructions that, when executed by the processor, cause the processor to provide a network public key associated with the network device to the configurator device or the client device, the network public key having a corresponding network private key.
61. The network device of embodiment 59, further comprising:
   a network interface; and
   wherein the instructions, when executed by the processor, cause the processor to:
      transmit, via the network interface, a first message on a default channel, wherein the first message includes information derived from either the client public key or a network public key associated with the network device.
62. The network device of embodiment 59, wherein the instructions, when executed by the processor, cause the processor to:
   determine a shared key for use with the client device, the shared key based at least in part on the client public key and a network private key.
63. The network device of embodiment 59, wherein the instructions, when executed by the processor, cause the processor to:
   receive a request message from the configurator device;
   send a nonce to the configurator device; and
   receive an enrollment message from the configurator device, the enrollment message including the client public key and a configurator signature derived, at least in part, from the nonce and a configurator private key.
64. The network device of embodiment 63, wherein the instructions, when executed by the processor, cause the processor to:
   send an enrollment key from the network device; and
   use the enrollment key with the client public key for the authentication between the network device and the client device.
65. The network device of embodiment 59, wherein the instructions, when executed by the processor, cause the processor to:
   sending configuration data from the network device to the client device after using the client public key for authentication between the network device and the client device.
66. The network device of embodiment 59, further comprising:
   memory for maintaining, at the network device, a list of client devices and a corresponding client public key for each of the list of client devices.
67. The network device of embodiment 66, wherein the instructions, when executed by the processor, cause the processor to:
   upon determining a change to the list of client devices, send a notification of the change to another network device.
68. The network device of embodiment 59, wherein the instructions, when executed by the processor, cause the processor to:
   memory for maintaining, at the network device, a list of configurator devices and a corresponding trust relationship key for each of the list of configurator devices.
69. A client device, comprising:
   a processor; and
   memory for storing instructions which, when executed by the processor, cause the processor to:
      receive a first nonce and a network public key associated with a network device;
      generate a second nonce;
      determine a shared key based at least in part on a calculation that includes the first nonce, the second nonce, the network public key, and a client private key associated with the client device, wherein the client private key corresponds to a client public key associated with the client device; and
      send an authentication response having a least a portion that is derived from the shared key, wherein the authentication response includes the second nonce.
70. The client device of embodiment 69, wherein the instructions, when executed by the processor, cause the processor to:
   prior to receiving the first nonce, send the client public key to a configurator device having a trust relationship with the network device.
71. The client device of embodiment 69, wherein the instructions, when executed by the processor, cause the processor to:
   monitor a default channel for a first message having configuration data; and
   receive the first message on the default channel, wherein the configuration data includes information for the client device to associate with the network device.
72. The client device of embodiment 71, wherein the first message includes identity information based, at least in part, on either the client public key or the network public key.
73. A computer readable medium having instructions stored therein, which when executed by a processor cause the processor to perform operations comprising:
   establishing, at a configurator device, a trust relationship with a network device;
   determining, at the configurator device, a client public key associated with a client device; and
   sending, from the configurator device to the network device in accordance with the trust relationship, the client public key, wherein an authentication between the network device and the client device is based at least in part on the client public key.
74. The computer readable medium of embodiment 73, wherein the instructions, when executed by a processor cause the processor to perform operations comprising:
   sending, from the configurator device or the network device to the client device, a network public key associated with the network device, wherein the authentication between the network device and the client device is further based at least in part on the network public key.
75. The computer readable medium of embodiment 73, wherein the instructions, when executed by a processor cause the processor to perform operations comprising:
   determining a network public key associated with the network device;
   sending a configurator public key to the network device, the configurator public key corresponding to a configurator private key; and
   determining a trust relationship key associated with the trust relationship based at least in part on the network public key and the configurator private key.
76. The computer readable medium of embodiment 75, wherein the instructions, when executed by a processor cause the processor to perform operations comprising:
   detecting at least one of the network public key and the client public key using at least one member of the group consisting of a camera, a microphone, a light detector, a sensor, and a short-range radio frequency interface of the configurator device.
77. The computer readable medium of embodiment 73, wherein the instructions, when executed by a processor cause the processor to perform operations that comprise:
   sending a request message to the network device;
   receiving a nonce from the network device; and
   sending an enrollment message to the network device, the enrollment message including the client public key and a configurator signature, wherein the configurator signature provides authentication to the network device that the configurator device is authorized to send the enrollment message.
78. The computer readable medium of embodiment 77, wherein the instructions, when executed by a processor cause the processor to perform operations that comprise:
   receiving an enrollment key from the network device; and
   sending the enrollment key to the client device, wherein the enrollment key is used with the client public key for the authentication between the network device and the client device.
79. The computer readable medium of embodiment 73, wherein the instructions, when executed by a processor cause the processor to perform operations that comprise:
   transmitting a first message on a default channel accessible by the client device, the first message including configuration data to aid the client device in associating with the network device.
80. The computer readable medium of embodiment 73, the instructions, when executed by a processor cause the processor to perform operations that comprise:
   maintaining a list of network devices and a corresponding network public key for each of the list of network devices.
81. A computer readable medium having instructions stored therein, which when executed by a processor cause the processor to perform operations comprising:
   establishing, at a network device, a trust relationship with a configurator device; and
   receiving, from the configurator device in accordance with the trust relationship, a client public key associated with a client device; and
   using the client public key for authentication between the network device and the client device.
82. The computer readable medium of embodiment 81, wherein the instructions, when executed by a processor cause the processor to perform operations comprising:
   providing a network public key associated with the network device to the configurator device or the client device, the network public key having a corresponding network private key.
83. The computer readable medium of embodiment 82, wherein the instructions, when executed by a processor cause the processor to perform operations that comprise:
   determining a shared key for use with the client device, the shared key based at least in part on the client public key and a network private key.
84. The computer readable medium of embodiment 81, wherein the instructions, when executed by a processor cause the processor to perform operations that comprise:
   receiving a request message from the configurator device;
   sending a nonce to the configurator device; and
   receiving an enrollment message from the configurator device, the enrollment message including the client public key and a configurator signature derived, at least in part, from the nonce and a configurator private key.
85. The computer readable medium of embodiment 84, wherein the instructions, when executed by a processor cause the processor to perform operations that comprise:
   sending an enrollment key from the network device; and
   using the enrollment key with the client public key for the authentication between the network device and the client device.
86. The computer readable medium of embodiment 85, wherein the instructions, when executed by a processor cause the processor to perform operations that comprise:
   sending configuration data from the network device to the client device after using the client public key for authentication between the network device and the client device.
87. The computer readable medium of embodiment 85, wherein the instructions, when executed by a processor cause the processor to perform operations that comprise:
   maintaining, at the network device, a list of client devices and a corresponding client public key for each of the list of client devices.
88. The computer readable medium of embodiment 87, wherein the instructions, when executed by a processor cause the processor to perform operations that comprise:
   upon determining a change to the list of client devices, sending a notification of the change to another network device.
89. A computer readable medium having instructions stored therein, which when executed by a processor cause the processor to perform operations comprising:
   receiving, at a client device, a first nonce and a network public key associated with a network device;
   generating a second nonce;
   determining a shared key based at least in part on a calculation that includes the first nonce, the second nonce, the network public key, and a client private key associated with the client device, wherein the client private key corresponds to a client public key associated with the client device; and
   sending an authentication response having a least a portion that is derived from the shared key, wherein the authentication response includes the second nonce.
90. The computer readable medium of embodiment 89, wherein the shared key matches a corresponding shared key at the network device, the corresponding shared key based at least in part on a corresponding calculation, at the network device, that includes the first nonce, the second nonce, a network private key, and the client public key.
91. The computer readable medium of embodiment 89, wherein the instructions, when executed by a processor cause the processor to perform operations that comprise:
   sending the client public key to a configurator device having a trust relationship with the network device.
92. The computer readable medium of embodiment 89, wherein the instructions, when executed by a processor cause the processor to perform operations that comprise:
   monitoring a default channel for a first message having configuration data; and
   receiving the first message on the default channel, wherein the configuration data includes information for the client device to associate with the network device.
93. The computer readable medium of embodiment 92, wherein the first message includes identity information based, at least in part, on either the client public key or the network public key.

## Claims

1. A method for authenticating a client device (110) with a network device (120), comprising:
determining (1014, 1016), at a configurator device (131), a first public key associated with one of the client device (110) or the network device (120);
generating, at the configurator device (131), a first certificate based on the first public key and a configurator private key; and
sending (1024,1026) the first certificate to the one of the client device (110) or the network device (120) to facilitate an authentication process between the client device (110) and the network device (120).

2. The method of claim 1, further comprising:
determining (1014, 1016), at the configurator device (131), a second public key associated with the other one of the client device (110) or the network device (120);
generating, at the configurator device (131), a second certificate based on the second public key and the configurator private key; and
sending (1024, 1026) the second certificate to the other one of the client device (110) or the network device (120) to facilitate the authentication process between the client device (110) and the network device (120).

3. The method of claim 1, wherein the first certificate verifies identity of the one of the client device (110) or the network device (120), and wherein the authentication process is based on a shared key derived, at least in part, from the first certificate.

4. The method of any of the preceding claims, wherein the configurator device (131) comprises a trusted service, in particular a cloud-based trusted service.

5. A method for authenticating a client device (110) with a network device (120), comprising:
receiving (1026), at the client device (110), a client certificate from a configurator device (130);
sending (1034), by the client device (110), an authentication request message to the network device (120), the authentication request message comprising the client certificate and a client-provided nonce.

6. The method of claim 5, further comprising:
receiving (1032), at the client device (110), an authentication response message from the network device (120), the authentication response message comprising a network-provided nonce, a network certificate and a MAC of the client-provided nonce.

7. The method of claim 6, further comprising:
verifying (1042), by the client device (110), the network certificate, preferably using a configurator public key; and
generating, at the client device (110), a shared key using the network-provided nonce, the client-provided nonce, a network public key stored in the network certificate, and a client public key.

8. A method for authenticating a client device (110) with a network device (120), comprising:
receiving (1024), at the network device (120), a network certificate from a configurator device (130);
receiving (1034), at the network device (120), an authentication request message from the client device (120), the authentication request message comprising a client certificate and a client-provided nonce.

9. The method of claim 8, further comprising:
verifying (1046), at the network device (120), the client certificate, preferably using a configurator public key; and
sending (1032), by the network device (120), an authentication response message to the client device (110), the authentication response message comprising a network-provided nonce, the network certificate and a MAC of the client-provided nonce.

10. The method of claim 9, further comprising:
generating, by the network device (120), a shared key using the network-provided nonce, the client-provided nonce, a network public key stored in the network certificate, and a client public key.

11. A configurator device (131) adapted for performing a method according to any of the preceding claims 1-4.

12. A network device (120) adapted for performing a method according to any of the preceding claims 8-10.

13. A client device (110) adapted for performing a method according to any of the preceding claims 5-7.

14. A computer program comprising instructions for implementing a method according to any of the preceding claims 1-4, 5-7 and/or 8-10.
